(19) Europäisches Patentamt
European Patent Office
Office européen des brevets

(11) Publication number: **0 217 954**
**A1**

(12) **EUROPEAN PATENT APPLICATION**

published in accordance with Art. 158(3) EPC

(21) Application number: **85903707.9**

(22) Date of filing: **23.07.85**

Data of the international application taken as a basis:

(86) International application number: **PCT/JP 85/00418**

(87) International publication number: **WO 86/06185 (23.10.86 86/23)**

(51) Int. Cl.⁴: **G 05 F 1/45**, H 02 P 1/26

(30) Priority: **08.04.85 JP 72669/85**
**10.06.85 JP 125540/85**

(43) Date of publication of application: **15.04.87 Bulletin 87/16**

(84) Designated Contracting States: **CH DE FR GB LI NL SE**

(71) Applicant: **KABUSHIKI KAISHA SP PLANNING, 203, Maenosaka Mansion 21-1, Meguritacho 1-chome, Higashimurayama-shi Tokyo 189 (JP)**

(72) Inventor: **ISHINO, Yoshikazu, 203, Maenosaka Mansion 21-1, Meguritacho 1-chome, Higashimurayama-shi Tokyo 189 (JP)**

(74) Representative: **Lehn, Werner, Dipl.-Ing. et al, Hoffmann, Eitle & Partner Patentanwälte Arabellastrasse 4 (Sternhaus), D-8000 München 81 (DE)**

(54) **ELECTRIC POWER CONTROLLER.**

(57) An electric power controller controls a power-source voltage (Ein) with a thyristor (18), supplies the power to a plurality of devices (14), (16), and is equipped with means (28) which detects predetermined operation of a predetermined device (14) such as an induction motor at the time of starting. When the predetermined device (14) is in predetermined operation, the supply voltage (Eout) is boosted by the detected output. During the periods in which the device is not in predetermined operation, the supply voltage (Eout) is returned to the initially controlled value, making it possible to control electric power without adversely affecting the predetermined device (14) at the time of starting.

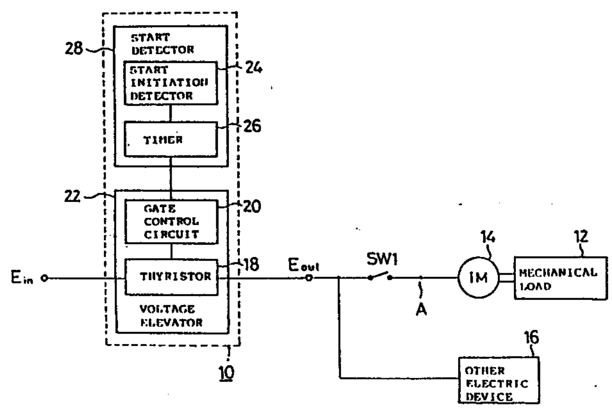


EP 0 217 954 A1

TITLE MODIFIED
see front page



SPECIFICATION

POWER CONTROLLER

TECHNICAL FIELD

This invention relates to a power controller and, more particularly to a power controller for dropping a power source voltage by a thyristor provided between a power source and a load side electric device to supply the voltage to the electric device, thereby performing power-saving, dimming or rotating control.

BACKGROUND ART

There have been heretofore a rotation control or ON/OFF control for a motor and a dimming for a lighting implement as a power control using a thyristor or a power transistor such as an SCR, a triac and a GTO.

Recently, a power-saving has been tried in a lighting implement by a thyristor to achieve the effective utilization of energy resources and the saving of power expenses.

When a voltage dropped by a thyristor from a power source voltage is applied to a fluorescent lamp implement to save the power or to dim the lamp, there arises a drawback that the filament of an ordinary glow type fluorescent lamp is not, for example, sufficiently heated at initial lighting time so that its kick voltage becomes insufficient, resulting in a difficulty in lighting the lamp.

There also arises an inconvenience that a flicker phenomenon feasibly occurs when the applied voltage is low due to the ageing consumption of a fluorescent tube during the lighting of the fluorescent lamp or a similar flicker phenomenon takes place due to the decrease in a power source voltage (a line voltage) itself of input side owing to certain circumferences.

A system for saving power by applying a thyristor to a motor and supplying the voltage dropped from a power source voltage to the motor to save the power is not almost known heretofore, but the inventor has discovered a system having a motor of the type capable of saving power.

However, when intended to save the power of the motor, such as, for example when an induction motor with a mechanical load having a heavy starting load torque is operated, if a voltage dropped from a power source voltage is applied to the motor, the motor does not smoothly start due to insufficient effective power at the starting time, a rotary locking phenomenon occurs due to the unbalance between a rotary torque and a load torque, and a drawback of causing the motor to occur, thereby resulting in a difficulty in the starting of the motor.

Other electric device not to be power-saved is provided in parallel at the load side of a thyristor except a fluorescent lamp, and when the other electric device is operated or performs a special operation, the other device might be improperly operated by the voltage dropped from the power source voltage.

An object of this invention is to provide a power controller which can eliminate the drawbacks of the conventional device and smoothly start or normally operate an electric device connected to the load side of the power controller such as a thyristor or a power transistor to achieve power-saving, dimming or rotation control.

Another object of the invention is to provide a system for saving the power for a motor.

## DISCLOSURE OF THE INVENTION

The above objects are performed by a power controller according to this invention described below. More particularly, the power controller comprising:

power control means provided between a power source and a plurality of load side electric devices provided in parallel for controlling the power by a predetermined fixed or variable set value by dropping the power source voltage and supplying the dropped voltage to a load side,

operation detecting means for detecting the presence or absence of one or more types of operations of different types of one or more electric devices of the plurality of electric devices, and

power control regulating means for stopping the predetermined power control operation by the predetermined set value by the power control means to raise the supplied voltage by the output of the operation detecting means during the predetermined operation of any of the predetermined one or more electric devices and releasing the stop of the predetermined power control by the predetermined set value of the power control means when any of the predetermined one or more electric devices is not operated.

BRIEF DESCRIPTION OF THE DRAWINGS

These and other features and the other objects of this invention will become fully apparent by the following description when read in conjunction with the best mode for practicing this invention shown in the accompanying drawings. In the drawings,

Fig. 1 is a schematic circuit diagram of a power controller for achieving a rotation control or a power saving control of an induction motor according to a first embodiment of this invention;

Fig. 2 is a block diagram of an example of a start initiation detector in Fig. 1;

Fig. 3 is a block diagram of another example of the start initiation detector in Fig. 1;

Fig. 4 is a block diagram showing another concrete example in Fig. 2;

Fig. 5 is a block diagram showing still another concrete example in Fig. 2;

Fig. 6 is a block diagram showing yet another concrete example in Fig. 2;

Fig. 7 is a schematic circuit diagram of a power controller for achieving a rotation control or a power saving control of an induction motor according to a second embodiment of this invention;

Fig. 8 is a block diagram showing an example of a start finish detector in Fig. 7;

Fig. 9 is a block diagram showing another example of the start finish detector in Fig. 7;

Fig. 10 is a schematic circuit diagram of a power controller for achieving a rotation control or a power-saving control of an induction motor according to a third embodiment of this invention;

Fig. 11 is a load side circuit diagram of the case that a discharge lamp illuminator is dimmed or power-save controlled as designated in the first to third embodiments;

Fig. 12 is a detailed circuit diagram of a power controller with an entire vending machine as a power-saving object according to a fourth embodiment of this invention;

Fig. 13 is a graphical diagram for describing the operation of a bypass circuit of Fig. 12;

Fig. 14 is a circuit diagram showing a modified example of a power source voltage detector in Fig. 12;

Fig. 15 is a circuit diagram showing a modified example of a gate control circuit in Fig. 12;

Fig. 16 is a graphical diagram for comparing the circuit operation of Fig. 15 with the case of Fig. 12;

Fig. 17 is a circuit diagram showing an example of the case that a power controller is constructed by omitting a timer in Fig. 12;

Fig. 18 is a circuit diagram showing a power controller for controlling power-saving with a compressor according to a fifth embodiment of this invention;

Fig. 19 is a circuit diagram showing a power controller for achieving dimming or power-saving control with a fluorescent lamp implement according to sixth embodiment of this invention;

Fig. 20 is a circuit diagram showing a power controller for achieving power-saving for a refrigerator according to a seventh embodiment of this invention;

Fig. 21 is a circuit diagram showing a power controller for power-saving of the case that a compressor motor and a fluorescent lamp implement are connected in parallel with a load side according to an eighth embodiment of this invention;

Fig. 22 is a circuit diagram showing a modified embodiment of the eighth embodiment in Fig. 21 according to ninth embodiment of this invention;

Fig. 23 is a circuit diagram showing a power controller for power-saving a vending machine according to tenth embodiment of this invention;

Fig. 24 is a circuit diagram showing a modified embodiment of a power controller shown in Fig. 23;

Fig. 25 is a load side circuit diagram including an induction motor with a blower; and

Fig. 26 is a load side circuit diagram including an induction motor with a pump.

BEST MODE FOR CARRYING OUT THE INVENTION

Fig. 1 shows an embodiment of a power controller applied to a rotation control or power-saving control of an induction motor having a mechanical load according to this invention, but it will be apparent that this invention is not limited to the embodiment. In Fig. 1, an AC power source $E_{in}$ such as a single-phase or 3-phase commercial power source or non-utility generator power source is supplied to a power controller 10, and a voltage $E_{out}$ controlled by the power controller 10 is supplied to an induction motor 14 side with a mechanical load 12 which has a switch SW1 for energizing a power source. Other electric device 16 is connected in parallel with the induction motor 14 to the output side of the power controller 10. The electric device 16 may be an induction motor which is subjected to a rotation control or a power-saving control similarly to the induction motor 14 or an electric device to be or not to be power-controlled of the other type.

The power controller 10 has a voltage elevator 22 which has a phase control circuit including a thyristor 18 for dropping the power source voltage $E_{in}$ and outputting it, and a gate control circuit 20 for controlling the gate of the thyristor 18, and a start detector 28 including a start initiation detector 24 for detecting the start initiation of the induction motor 14 and a timer 26 to detect presence or absence of the start.

The start initiation detector 24 detects the start initiation of the induction motor 14 by closing the switch SW1, and outputs a detection signal to the timer 26. The start initiation detector 24 may employ, as shown in Fig. 2, an electric variation detector 30 for detecting an electric variation occurred in the circuit at the starting time, or, as shown in Fig. 3, a switch ON operation detector 32 for detecting the ON operation of the switch SW1, for example, by a mechanically interlocking switch. Further, the electric variation detector 30 may employ, as shown in Fig. 4, a starting current detector 34 inserted in series in the circuit for detecting the rise of the large starting current flowed when the induction motor 14 is started, as shown in Fig. 5, a noise component detector 36 for detecting a noise component generated upon starting such as an extremely large rush current generated when the induction motor 14 has a capacitive component or a surge voltage generated due to a chattering when the switch SW1 is closed by electrostatically, electromagnetically or resistively coupling the noise component with the circuit, or, as shown in Fig. 6, a dip detector 38 for detecting the dip of the power source voltage $E_{in}$ generated at the power source side by the large starting current by inputting the voltage $E_{in}$.

The timer 26 may be, for example, formed of an IC timer, and a timer time T is set in advance by a CR time constant circuit in the timer 26. When the timer 26 inputs a detection signal from the start initiation detector 24, the timer 26 starts, and simultaneously outputs a control signal as a voltage rise command (start compensation command). The voltage rise command output is continued until the time T is elapsed to a timeup after the timer 26 starts. The time T is set to a sufficient time (e.g., approx. several seconds) to finish the start of the induction motor 14 from when the switch SW1 is closed. The operating period of the timer 26 approximates the starting period of the induction motor 14.

The output of the timer 26 is applied to the gate control circuit 20. The gate control circuit 20 enables a rotation control or a power saving control for the induction motor 14, and varies the application of a trigger to the thyristor 18 to compensate the start to vary the output voltage of the thyristor 18. In other words, the gate control circuit 20 has a phase control circuit that a control value for achieving a rotation control or a power-saving control is fixed or variable, and has a switching function for switching a conducting angle to a preset 100% or the vicinity of 100% while receiving a voltage rise command. The gate control circuit 20 controls the thyristor 18 at a relatively small conducting angle to achieve a rotation control or a power-saving control when receiving no voltage rise command, outputs the $E_{out}$ (small) normally smaller than the $E_{in}$, controls the thyristor 18 at a relatively large conducting angle while receiving the voltage rise command (referred to as "a power control regulation"), and outputs the $E_{out}$ (large) normally larger than the $E_{out}$ (small). $E_{out}$(small) $\doteqdot E_{in}$ might be obtained by the control value even while achieving the rotation control or the power-saving control.

The gate control circuit 20 can utilize various known circuits, and may employ a phase control circuit for achieving a rotation or power-saving control for regulating the power control, or provides a switch control trigger circuit of the thyristor 18 in addition to the phase control circuit for achieving the rotation control or the power-saving control, turns ON the switch control trigger circuit while receiving the voltage rise command to obtain a large conducting angle (however, 100% conducting angle). In the former case, $E_{out}$ (large) $\leqq E_{in}$ may be obtained. In the latter case, $E_{out}$ (large) $= E_{in}$ may be obtained.

The thyristor 18 may employ a thyristor SCR, a triac or a GTO.

The timer 28 may utilize an analog timer, a digital timer, a dash-pot or a delay circuit.

The mechanical load 12 coupled with the induction motor 14 may include, for example, a blower, a pump or a compressor (such as an air compressor or a refrigerator compressor). The rotation control or the power-saving control can be performed by varying the voltage supplied to the induction motor 14.

$E_{in}$ represent various power source voltages such as 100V, 120V or 220V.

Then, the operation of the power controller shown in Fig. 1 will now be described. A small conducting angle is set in advance in the gate control circuit 20 to achieve a rotation control or a power-saving control, and it is assumed that the induction motor 14 causes the start to fail with the value of the $E_{out}$ (small) at this time (e.g., $3/4E_{in}$). The switch SW1 is opened, and other switch for energizing the power source of the other electric device 16 is closed to energize it.

Since a current is flowed to the power controller 10 due to the energization of the other electric device 16, the thyristor 18 performs a phase control. Therefore, a predetermined power source voltage $E_{in}$ is dropped by the power controller 10, for example, to 3/4, and supplied to the load side as $E_{out}$ (small).

When the SW1 is closed to start the induction motor 14 in this state, the start initiation detector 24 of the start detector 28 of one example of operation detecting means detects the occurrence of the start of the induction motor 14, and outputs a start initiation detection signal to the timer 26. The timer 26 is energized by the detection signal to, for example, apply a voltage rise command for phase-controlling at substantially 100% conducting angle during the time T to the gate control circuit 20, stops a predetermined power control such as a rotation control, and returns the supplied voltage to the load from $E_{out}$ (small)=3/4$E_{in}$ to $E_{out}$ (large)=$E_{in}$ during the corresponding time T. Thus, the predetermined voltage sufficient for the smooth starting operation of the magnitude $E_{in}$ is applied to the induction motor 14 during the starting operation to smoothly start the induction motor 14.

When several second T set in advance by the timer 26 is elapsed, the power controller 10 releases the stop of the rotation control or power-saving control, returns to the control state, applies the voltage $E_{out}$ (small) to the induction motor 14 to achieve the rotation control or the power-saving control.

The voltage returned from $E_{out}$ (small) to $E_{out}$ (large) may not always be the same as $E_{in}$ if the induction motor 14 is smoothly started, such as, for example, 9/10$E_{in}$. $E_{out}$ (small) is not limited to

$3/4E_{in}$, but may be, of course, larger or smaller than $3/4R_{in}$.

In case that the other electric device 16 is an induction motor which is subjected to the rotation control or the power-saving control, the induction motor may be compensated for the start similarly to the induction motor 14. In this case, if the electric variation occurrence detector 30 in Fig. 2 is employed, it can be used commonly to the start initiation detector 24 of a plurality of induction motors, and when switch ON detectors 32 are individually provided, the timer 26 may be commonly used.

Even when the other electric device 16 is provided at the output side of the power controller 10 and the induction motor 14 is solely connected or other electric device 16 which is operated simultaneously with the induction motor 14 is provided, the abovementioned start compensation can be performed by the power controller 10 shown in Fig. 1. In this case, as designated by a second embodiment in Fig. 7, an ordinary operation detector 40 is provided instead of the start detector 28 in Fig. 1, and an ordinary control command is fed to a gate control circuit 42 while detecting the ordinary operation to perform a rotation control or a power-saving control.

The ordinary operation detector 40 has a start finish detector 44, an operation stop detector 46 and a control signal generator 48 which outputs an ordinary control command from when inputting a start finish detection signal from the start finish detector 44 to when inputting an operation stop detection signal. The start finish detector 44 may be formed of a starting current reduction detector 50 for detecting the approach of a large starting current flowed after the SW1 is closed to an ordinary value as approaching to the completion of the starting operation as shown in Fig. 8, or a rotating speed rise detector 52 for detecting the approach of the rotating speed gradually rising after the SW1 is closed to the ordinary value as approaching to the completion of the starting operation as shown in Fig. 9. In the case of Fig. 9, it is adapted for the case that a rotation sensor is provided in the induction motor 14 to perform the rotation control by the feedback control.

The operation stop detector 46 may employ, similarly to Fig. 2, an electric variation occurrence detector for detecting the occurrence of an electric variation taken place on a power supply circuit (a power supply system) upon stopping of the operation such as a noise component detector for detecting a large surge voltage or a radioactive noise generated when the load current stop detector or the SW1 is OFF, a switch OFF operation detector for detecting the OFF operation of the SS1, for example, by a mechanically interlocking switch or a rotation stop detector for detecting the stop of the rotation of the induction motor 14.

The control signal generator 48 may employ an R-S flip-flop which sets by inputting, for example, a start finish detection signal and resets by inputting an operation stop detection signal, or a switch circuit such as a relay which is closed by a start finish detection signal, opened by an operation stop detection signal, and outputs a switch signal during the ON period.

When the gate control circuit 42 does not input an ordinary control command from the ordinary operation detector 40, the gate control circuit 42 is switched to a large conducting angle. Therefore, the induction motor 14 receives a large voltage of $E_{out}$ (large) to smoothly start until the starting operation is finished after the SW1 is closed. When the induction motor finishes the starting and enters the ordinary operation, the gate control circuit 42 which inputs the ordinary control command performs the ordinary rotation control or power-saving control, sets the conducting angle, for example, to a preset small conducting angle, and

supplies the $E_{out}$ (small) to the load side.

When the operation is stopped, the ordinary control command is released, and the gate control circuit 42 is again switched to the large conducting angle. Since the load current becomes zero when the operation is stopped, the output voltage of the power controller 54 also becomes zero.

Fig. 10 shows a third embodiment of this invention. A voltage elevator 58 of a power controller 56 has a thyristor 18, a gate control circuit 60 for achieving a rotation control or a power-saving control of an induction motor 14, and a shorting circuit 62 for shorting the thyristor 18 as required. The shorting circuit 62 may be formed by a mechanical relay or a solid type AC relay. When the shorting circuit 62 receives a voltage rise command from an exterior, the shorting circuit 62 closes a circuit to short the both sides of the thyristor 18 to stop the phase control of the thyristor 18, and outputs the input voltage $E_{in}$ as $E_{out}$(large) as it is. When the shorting circuit 62 does not, on the contrary, inputs the voltage rise command from the exterior, the shorting circuit 62 opens the circuit to disconnect the thyrictor 18, places the thyristor 18 under the control of the gate control circuit 60 to perform a rotation control or power-saving control.

The gate control circuit 60 has a phase control circuit for achieving a rotation control or a power-saving control, and performs the control value fixed, continuous or stepwisely variable.

A start detector 64 of the power controller 56 has a start initiation detector 24 similarly to that in Fig. 1, a start finish detector 44 similar to that in Fig. 7, and a control signal generator 66 which outputs a voltage rise command during a period from when inputting a start initiation detection signal from the start initiation detector 34 to when inputting a start finish detection signal as a starting period. The control signal generator 66 may be formed similarly to the control signal generator 48 in Fig. 7.

The operation of the power controller 56 of Fig. 10 will be simply described. The SW1 is opened in advance, and it is assumed that other electric device 16 is energized to output $E_{out}$(small).

When the SW1 is closed to start the induction motor 14 in this state, the start initiation detector 34 detects the occurrence of the start of the induction motor 14, and outputs a start initiation detection signal to the control signal generator 66. The control signal generator 66 is energized by this detection signal to apply a voltage rise command to the shorting circuit 66, and returns the supplied voltage to a load from $E_{out}$(small)=3/4$E_{in}$ to $E_{out}$(large)=$E_{in}$. Thus, the predetermined voltage sufficient for smooth starting operation of the induction motor 14 of the magnitude $E_{in}$ is applied to the induction motor 14 during the starting operation to smoothly start the induction motor 14.

When the start approaches the completion, the start finish detector 44 detects the start finish and outputs a start finish detection signal, the control signal generator 66 stops the voltage rise command output. Thus, the shorting circuit 62 is disconnected from the thyristor 18, and the thyristor 18 performs the phase control of ~~rotation~~ control of power saving control by the gate control circuit 60, and outputs, for example, $E_{out}$(small)=3/4$E_{in}$ to the load side. Therefore, the induction motor 14 is subjected to a rotation control or a power-saving control during the ordinary operation.

The $E_{out}$(small) is not limited to 3/4$E_{in}$ similarly to that in Fig. 1.

The other electric device 16 is an induction motor with a mechanical load. If this induction motor is desired to be compensated for the start, a start detector 64 for the other electric device 16 is provided separately from the start detector 64 for the induction motor 14, the voltage rise command of the start detector 64 (the logic sum of the presence and absence of the output) is used as a final voltage rise command to be inputted to the voltage elevator 58, and even if either start detector 64 outputs the voltage rise command, the supplied voltage may be raised. In addition, the start detection of the other electric device 16 may be performed by using the start detector 28 in Fig. 1 by employing the start initiation detector 24, for example, as the switch ON detector 32 for detecting the closure of the power source switch of the other electric device 16.

Even when the other electric device 16 is not provided at the output side of the power controller 56, the induction motor 14 is solely connected or the other electric device 15 operated simultaneously with the induction motor 14 is provided, the abovementioned start compensation can be performed by the power controller 56 shown in Fig. 10.

Figs. 1, 7 and 10 have shown the case that the power controller performed the rotation control or the power-saving control of the induction motor 14 with the mechanical load 12. This invention may be additionally applied to an illumination implement 68 of a discharge lamp such as a fluorescent lamp or a neon lamp having SW2 as shown in Fig. 11. Since a low voltage for performing a dimming or power-saving is supplied, even if an initial lighting operation becomes difficult, a start compensation can be effectively performed. Of course, the illumination implement 68 of discharge lamp connected to the load side may be sole, a plurality in parallel with other electric device 70 or in parallel with an electric device of other type.

The voltage elevator 22 of the power controller 10 shown in Figs. 1 and 7 may be replaced with the voltage elevator 58 shown in Fig. 10. The starting current detector 34 in Fig. 4 and the starting current reduction detector 50 in Fig. 8 have been provided in a main circuit from the $E_{in}$ of the power controllers 10, 54 flowed with all load currents to $E_{out}$. However, they may be provided in a branch power supply line of the electric device for performing the start compensation around the SW1 (Points A or A' in Figs. 1 or 7).

Fig. 12 shows a fourth embodiment of this invention, and is a circuit diagram showing an example that a power-saving power controller 100 according to this invention is applied to a vending machine. In Fig. 12, a main circuit is formed by connecting a voltage elevator 136 and a load 138 of a vending machine of rated $E_{in}$V in series through a main power source switch 132 and a fuse 234 to a plug 130 which, for example, receives a commercial power source $ACE_{in}V$.

The voltage elevator 136 has a triac 140 inserted into the main circuit, and a gate control circuit 142 for turning ON the triac 140 at a predetermined conducting angle. The gate control circuit 142 has a phase control switching circuit 170 for switching the phase angle in two stages of substantially minimum value and the ordinary phase angle.

The gate control circuit 142 has a capacitor C1 connected at one terminal to the $T_1$-side of the triac 140, four diodes D1 to D4 connected in a bridge in a predetermined direction with both ends of the C1, resistors R1 to R5 connected between the connecting points of D1 and D2, D2 and D3, D3 and D4 and the $T_2$ side of the triac 140, and an SBS inserted between the other terminal of the C1, i.e., the connecting point of the D2 and D3 and the gate terminal G of the triac 140.

The gate control circuit 142 flows a current from the C1 to the R2, R3, R4 during the period that the $T_1$ side of the triac 140 is positive and the $T_2$ side is negative, and, on the contrary, a current from the R4, R2, R3 to the C1 during the period that the $T_1$ side is negative and the $T_2$ side is positive to switch the SBS after a predetermined charging time determined by the C1

and the R2 to F4 from when the polarity is changed to apply negative or positive trigger pulse to the G terminal of the triac 140 in either case.

When the gate control circuit 140 applies the trigger pulse to the triac 140, the triac 140 is conducted and holds the conductive state until the current flowed between the $T_1$ and the $T_2$ becomes zero. The angle from when the AC power source voltage $E_{in}$ becomes zero to when the trigger pulse is received to conduct the triac 140 is called "a phase angle". This phase angle may be variable by regulating R3 of a variable resistor. In this embodiment, in order to save the voltage (line voltage ) of $ACE_{in}$(V) inputted from the plug 130, for example, in the state that the both ends of the resistors R2, R3 are not shorted, it is dropped to $E_{out}$(small)=95/100$E_{in}$(V) and set to the value supplied to the load 38. The phase angle at this time is hereinafter referred to as "a power-saving phase angle".

It is, of course, that the $E_{out}$(small) may be larger than or smaller than 85/100$E_{in}$.

On the other hand, the R4 is much smaller than the R2, R3, and when the both ends of the R2, R3 are shorted, a nonconducting angle is set to the minimum phase substantially near zero. In this case, an input

voltage $E_{in}(V)$ is applied as $E_{out}$(large) to the load 138 as it is.

The voltage applied to the load may be set to a phase angle to become, for example, $E_{out}(large)=9/10E_{in}(V)$ instead of the minimum phase angle when the both ends of the R2, R3 are shorted by suitably varying the value of the R4.

The D1 to D4, R1, R5 in the gate control circuit 140 are for alleviating a hysteresis.

A choke coil L1 is connected in series in the main circuit of the $T_1$ terminal side of the triac 140, and a capacitor C2 is connected in parallel with the choke coil L1 and the triac 140. The L1, C2 form a low pass LC filter to suppress a high frequency noise generated when the triac 140 is turned ON and OFF, together with the choke coil L2 connected in series in the main circuit of the $T_2$ terminal side of the triac 140. C3, R6 inserted in parallel with the C2 are for regulating to suppress a noise and to improve the turning ON and OFF of the triac 140.

Cr, R7 and C5, R8 are connected in parallel between the terminals $T_1$ and $T_2$ of the triac 140. The C4, R7, C5, R8 prevent a flicker feasibly occurring when a fluorescent lamp 144 of a load 138 inputs a low voltage controlled in phase.

More particularly, when the phase-controlled voltage is generally applied to a fluorescent lamp load, if the power-saving rate is 20% or less with small phase angle, there is almost no problem, but if the power-saving rate exceeds 30%, a flicker phenomenon (including flashing of several second interval from fluctuation in every cycle) occurs in the phase angle, and when the phase angle further exceeds 90°, the lamp becomes impossible to light. Thus, the power-saving over 20% to 30% is heretofore impossible or difficult.

However, if a small current is flowed to the fluorescent lamp even when a triac is nonconducted (at a level not remarkably obstructing the power-saving effect), the inventor has discovered that the phase control over the phase angle of 90° or larger can be performed without the flicker phenomenon.

A method of flowing a small current to a fluorescent lamp when a triac is nonconducted has the steps of providing a bypass circuit in parallel with a triac in a main circuit, turning ON the bypass circuit only when the triac is nonconducted to flow the current, or always turning ON the bypass circuit, and flowing a current to the bypass circuit even when the triac is nonconducted and conducted (but since the voltage at both ends is almost near zero when the triac is conducted, the current flowed to the bypass circuit is extremely small). The former may be formed, for example, of a triac for forming a main circuit, and a thyristor, R, C, L controlled in reverse conducting angle thereto. The latter may be formed of R, C and L.

When the triac is nonconducted, a pulse generator for flowing a small current to a fluorescent lamp may be connected to both ends of the lamp. In summary, a thyristor for phase-controlling the power source voltage may be a small current supply circuit capable of flowing a small current to the fluorescent lamp at nonconducting time.

More particularly, the current may be a small current flowed to a bypass circuit of a sole resistor, but since the heat loss of the resistor becomes drawback, C is used mainly, and combined with R to set the constant suitably. Fig. 13 shows an example of the pattern of a fluorescent lamp current which contains a small current.

As described above, the power-saving of 80% or more can be performed.

In this embodiment described above, in which five glow type fluorescent lamps of 100V and 30W are employed, a preferable example includes C4=0.1μF, R7=100 ohms, C5=9.4 to 27μF, and R8=50 ohms. In case of 120V or 220V, the constants may be suitably altered. The R7, C5, R8 also have entirely a function of a snubber circuit. Even when the C5, R8 side becomes defective by disconnection, since the C4, R7 are set to the same constants as those of the conventional snubber circuit, the turning ON and OFF of the triac 140 may be held in a preferable state.

The load 138 is connected with an electric device such as an induction motor 148 coupled with goods (can juice, packed milk) cooling compressor 146, a fluorescent lamp 144, goods supplying mechanism (a coin mechanism) 150 or a microcomputer system 152 for identifying a money note in parallel. Other load includes, though not shown, a fan motor of a refrigerator.

Relay switches 154, 156, 158 for turning ON the power sources individually are respectively provided in the induction motor 148, the fluorescent lamp 144 and the goods supplying mechanism 150. The relay switch 154 is connected to a thermostat (not shown) which operates by detecting the goods temperature or the temperature in the refrigerator, closes simultaneously when the thermostat is closed if the goods temperature or the temperature in the refrigerator becomes the predetermined value or higher, and opens the thermostat when the goods temperature or the temperature in the refrigerator becomes the predetermined value or lower, to simultaneously open the relay switch 154.

The induction motor 14 has a constant rotating characteristic having less rotating speed variation even if the applied voltage changes, and the compressor 146 has substantially constant load torque even if the rotating speed varies. Normally, the induction motor 148 for rated $E_{in}$ for driving the compressor 146 can normally operate even if the applied voltage has the operating point of approx. 85/100 to 80/100$E_{in}$(V), and even if the applied voltage is dropped, the rotating speed change is less, and the refrigerating capacity does not almost alter. Further, the current alteration is less. Therefore, the power-saving can be performed in the amount of the voltage drop from $E_{in}$(V).

However, the starting torque of the induction motor 148 is small, while the starting load torque of the compressor 146 of reciprocation type is large. Thus, if the voltage applied to the induction motor 148 is, for example, 85/100(V) of $E_{in}$ when the relay switch 154 is closed to start the motor, the effective power becomes insufficient, a rotation locking phenomenon occurs due to an unbalance between the rotary torque and the load torque, and there is a possibility that the induction motor might not smoothly start.

In this embodiment, when the induction motor 148 is started in the state that the compressor 146 of a mechanical load is coupled, a large starting current (which is several times of that at ordinary operation time) is flowed to largely vary the voltage value $E_{in}$ of the commercial power source line. Therefore, this is utilized to prevent the induction motor 148 from becoming defective at starting time. A noise component generated in the circuit at starting time may be utilized.

The relay switch 156 is interlocked to a time limit timer (not shown), which is, for example, closed from 5 o'clock in the evening to 7 o'clock in the morning when the outdoor becomes dark, while opened from 7 o'clock in the morning to 5 o'clock in the evening.

The fluorescent lamp 144 is used to readily identify the goods by a user by illuminating the sample of the goods, and when the applied voltage is, for example, set to $85/100E_{in}$(V) by the phase control for the rated $E_{in}$V, large power-saving rate of approx. 50% can be obtained.

However, if the applied voltage to the fluorescent lamp 144 is low when the relay switch 156 is closed at the initial lighting time similarly to the case of the induction motor 148, the filament is not sufficiently heated, and a kick voltage becomes insufficient to cause the lamp to result in a difficulty in lighting. After the lamp is once lit, if the applied voltage is phase-controlled to low voltage, the discharging operation reaidly becomes unstable. Particularly when an ageing deterioration occurs or the line voltage of the commercial power source decreases due to an increase in the power consumption in a general domestic in the evening, there might occur a flicker phenomenon.

In this embodiment, the initial lighting failure or a flicker phenomenon is prevented by utilizing the decrease in the noise component or the line voltage generated when the fluorescent lamp 144 is initially lit or the flicker phenomenon occurs.

The relay switch 158 is connected to a goods selection switch (not shown) through a microcomputer system, and when the goods selection switch is depressed, the goods supplying mechanism operates to drop goods to the outlet of a vending machine, for example, while rotatably feeding the goods.

The goods supplying mechanism 150 has a motor or a solenoid, and if the applied voltage is normally held at $85/100E_{in}$(V) or higher in the ordinary case, the goods may be dropped to the outlet. However, if installing environment of the vending machine is deteriorated and not cleaned, dusts are accumulated in the vending machine to disturb the movement of the supplying mechanism 150. Particularly in case of goods such as 1 liter can or 1 liter pack of heavy weight, if the applied voltage is low, the drive force becomes insufficient, and the goods tend to be engaged.

In this embodiment, the improper goods supply is prevented by utilizing spike (pulse) noise component generated when the relay switch 58 is closed and the voltage is applied to the goods supplying mechanism 150.

The microcomputer 152 is always energized, and not provided with a relay switch. A money note identifier which is operated by the microcomputer system 152 delicately detects, and might therefore erroneously operate if an abrupt noise generated when the triac 140 is turned ON and OFF is applied.

In this embodiment described above, L2 is further added to the LC filter of the L1, C2, C3 and R8 described above to prevent the microcomputer system 152 from erroneously operating.

A noise filter may be inserted to the position designated by broken lines B, B' for a load such as the microcomputer system 152.

A transformer 160 is connected in parallel with the main circuit at the load side of the fuse 134. The transformer 160 converts a primary input $ACE_{in}$(V), for example, into a secondary output AC 12(V), has a bridge circuit 162 having four diodes D5 to D8 connected with the secondary side, a resistor R9, a large capacity capacitor C6, a bleeder resistor R19, a power source ON displaying light emitting diode D9, a resistor R11, and a Zener diode ZD, and produces a stable DC voltage CE of 9V (Zener voltage of ZD) from $ACE_{in}$(V).

The transformer 160 and the bridge circuit 162 have a function as a power source voltage detector. In other words, the output terminal voltage BE (astable DC voltage) of the bridge circuit 162 is pulsated, but if the line voltage of AC100V is varied, the BE alters substantially proportional thereto. This BE is outputted as a power source voltage detection signal to a level converter 164. Even if the line voltage is slightly reduced, the CE does not almost alter.

This level converter 164 is connected at the collector through resistors R12, R13 to the DC voltage CE and at the emitter through a resistor R14 to the ground of a transistor Tr. The output terminal voltage BE of the bridge circuit 162 is applied through a resistor R15 to the base of the Tr.

Therefore, the emitter output $E_0$ of the Tr is varied proportionally to the BE. The amplitude of the output voltage $E_0$ can be regulated to the suitable value by varying R13 of a variable resistor.

The output voltage $E_0$ drops at the voltage level when power consumption increases in a general domestic to decrease the line voltage. The voltage level varies to drop when the line voltage transiently decreases by the large starting current flowed when the induction motor 148 is started.

When the fluorescent lamp 144 is lit at the initial time or generates a flicker, a noise component generated by the current change when the goods supplying mechanism 150 is started is mainly fed through the base circuit of the Tr to the Tr, and superposed on the output voltage $E_0$ in the amplified form.

The emitter output $E_o$ of the Tr is applied to the trigger terminal TR of a timer 172. The timer 172 is connected at the power source terminal $V_+$ to the DC voltage CE and at the terminal $V_-$ to the ground. The reset terminal R is connected to the CE. The threshold terminal TH is connected through a capacitor C7 to the ground, and through resistors R16 to R18 to the CE. The TH is connected to a discharging terminal DC. One of the R16, R17 is selected by a changeover switch 174, and the R17 is a variable resistor.

The R16 to R18, C7 are for setting a timer time of the timer 172, and when the changeover switch 174 is, for example, shifted to the R16 side, approx. 60 sec. of time is set, and when shifted to the R17 side, approx. 7 sec. of time is set. 7 sec. of the latter is sufficient time to start the induction motor 148 and the fluorescent lamp 144, and to operate the goods supplying mechanism 150.

The control voltage terminal CV of the timer 172 is connected through a capacitor C8 for preventing an erroneous operation to the ground.

The timer 172 thus constructed will be operated as below. More specifically, the DC terminal and the output terminal OUT are set in advance to "low" level, and when the C7 is completely discharged, if the input level of the Tr terminal is dropped to 1/3 or lower of the applied voltage between the $V_+$ and the $V_-$ (which is referred to as "a trigger threshold value $V_{TR}$"), the timer is started, and when the DC terminal is opened, the output terminal OUT is simultaneously set to "high" level.

The C7 is charged through the R18, R16 or R17 as time is elapsed, and when the + side voltage of the C7 arrives at 2/3 or higher of the applied voltage between the $V_+$ and the $V_-$, it is timeup, and when the DC terminal is set to "low" level, the output terminal OUT is simultaneously set to "a low" level.

The level of the emitter output $E_0$ of the Tr is set to become higher by the prescribed amount in the normal operation state than the trigger threshold value $V_{TR}$.

The OUT terminal of the timer 172 is connected through a gate circuit 175 to a phase control switching circuit 170. The phase control switching circuit 170 has four diodes D10 to D13 connected in a bridge at both ends of the R2, R3 connected in parallel in the trigger circuit 142, an SCR inserted between the connecting points of the D10 and D11, and the D12 and D13, and a gate circuit 175 for applying a gate voltage to the SCR.

The gate circuit 175 has a resistor R19 connected in series between the CE and the ground, a light emitting diode D14 for displaying during the operation of the switching circuit 170, resistors R20, R21. The OUT terminal of the timer 172 is connected between the R19 and the D14. Both the ends of the R21 are connected to the gate and cathode terminals of the timer.

When the OUT terminal of the timer 172 is "low" level, the D14 is not lit, and the voltage at both ends of the R21 is substantially zero. Thus, the SCR becomes nonconductive, and the phase control switching circuit 170 is disconnected from the R2, R3, which do not affect any. At this time, a triac 140 is controlled at power-saving phase angle.

When the OUT terminal of the timer 172 is, on the contrary, "high", the D14 is lit, a voltage is generated at both ends of the R21 to set the SCR to nonconductive state. At this time, the R2, R3 of the trigger circuit 42 are shorted through the D10 to D13, and the triac 140 is controlled by the minimum phase angle.

Then, the operation of the fourth embodiment constructed as described above will be described. The plug 130 is connected in advance to a commercial power source, and it is assumed that the main power source switch 132 is closed. Since a current is flowed to the microcomputer system 152 by energizing the power source, it is assumed that the triac 140 is voltage-phase-controlled at the power-saving phase angle. Therefore, the voltage of the load 138 becomes $F_{out}(small)=85/100E_{in}V$.

When the goods temperature or the temperature in the refrigerator initially rises so that a thermostat operates to close the relay switch 154, the voltage of $E_{out}(small)(V)$ is applied to the induction motor 148. The induction motor 148 tends to be energized by the application of the voltage to operate, but since the compressor 146 of mechanical load is coupled, the induction motor does not immediately start, and a large starting current flows at time time.

This starting current affects the influence to a commercial power source side, and the line voltage transiently vary to drop by the internal voltage drop. The dropping variation of the line voltage is detected by the transformer 160 and the bridge circuit 162, and input to the TR terminal of the timer 172 as the variation in the emitter output $E_0$ of the Tr.

Since the dropping variation of the $E_0$ is large, it exceeds the trigger threshold value $V_{TR}$ of the timer 172, and the timer will start. When the timer starts, the R2, R3 in the trigger circuit 142 are shorted. Therefore, the triac 140 phase-controls in the minimum phase angle, and the full voltage of approx. $E_{out}$(large)=$E_{in}$(V) is applied to the load 38.

Thus, the voltage sufficient to smoothly start the induction motor 148 of $E_{in}$(V) is applied to the induction motor 148 when the motor 148 is started, and the motor is smoothly started. When 7 sec. set in advance by the timer 72 is, for example, elapsed (the induction motor 48 arrives at the normal rotation in 2, 3 sec.), it is timeup, the triac 140 is returned to the power-saving phase angle control state. Then, the induction motor 148 is operated by the $E_{out}$(small) to perform the power-saving. The operation of the induction motor 148 is performed until the goods or the temperature in the refrigerator drops to the predetermined temperature so that the thermostat is opened.

Then, when a goods selection switch is depressed by a user, the relay switch 158 is closed, and the goods supplying mechanism 150 tends to start. In this case, a large spike noise is presented through the main circuit, the transformer 160 and the bridge circuit 162 to the base circuit at the emitter output $E_0$ of the Tr. Since the $E_0$ is momentarily dropped lower than the trigger threshold value $V_{TR}$ by the noise component riding on the $E_0$, the timer is started, the applied voltage $E_{out}$(small) for the goods supplying mechanism 150 becomes the full voltage of the $E_{out}$(large) similarly as described above, and the goods are effectively supplied without being engaged.

After the sufficient time for completing the operation of the goods supplying mechanism 150 is elapsed, it is timeup.

When it becomes 5 o'clock in the evening so that the time limit timer is operated to close the relay switch 156, the voltage of $E_{out}$(small)(V) is applied to the fluorescent lamp 144. The lamp 144 is energized by the application of the voltage, it starts discharging to tend to initially light. When this relay switch 56 is closed, if a discharge initiating operation takes place, large spike and discharge noise is generated to present an input emitter output $E_0$ due to the induction to the base circuit of the Tr or the creepage from the ground.

Since the $E_0$ drops lower than the momentary trigger threshold value $V_{TR}$ by the noise component (variable component) superposed on the $E_0$, the timer is started, the applied voltage to the fluorescent lamp 144 becomes the full voltage of $E_{out}$(large)=$E_{in}$(V) similarly to the above, the heating of the filament is sufficient, and the kick voltage is increased, thereby effectively lighting the lamp without improper initial lighting. Then, when the 7 sec. preset by the timer 172 is elapsed (sufficient time to complete the lighting of the fluorescent lamp 144), the triac 140 is returned to the control state at the ordinary power-saving phase angle. Therefore, the fluorescent lamp 144 is then continued to light by the $E_{out}$(small) (V), thereby performing the large power-saving. The fluorescent lamp 144 is lit by the operation of the time limit timer at 7 o'clock in the morning from the night until the relay switch 156 is opened.

In addition, when the fluorescent lamp 144 is

deteriorated in an ageing manner, its discharge becomes unstable due to the low applied voltage to $E_{out}$(small) (V) to cause a flicker phenomenon to occur. Thus, an extremely large noise is generated, fed to the base circuit of the Tr due to an induction to present at the emitter output $E_0$. Therefore, the $E_0$ momentarily drops lower than the trigger threshold value $V_{TR}$ by the noise component superposed on the $E_0$, thereby allowing the applied voltage to the fluorescent lamp 144 during lighting to become $E_{in}$V to the stable lighting state.

The application of the full voltage of the $E_{out}$(large)(V) is finished in 7 sec., and if flicker phenomenon does not then occur, it is returned to the original $E_{out}$(small)(V) application state. When becoming the $E_{out}$(small)(V), if there is a trend to cause flicker phenomenon to regenerate, since it immediately becomes full voltage applied state when the flicker phenomenon takes place, the flicker is suppressed as much as possible in view of timing to largely reduce the unpleasant feeling of a user. If the flicker phenomenon continues, the power consumption increases, but this can be also suppressed. If the flicker phenomenon always occurs by the application of the $E_{out}$(small)(V), the changeover switch 174 of the timer 172 is shifted to the R16 side to set the full

voltage applying time of 60 sec., thereby increasing the flicker generating period.

Then, if the commercial power source side voltage drops due to the increase in the power demand in a general domestic in the evening to cause the line voltage $ACE_{in}$(V) itself to drop, the DC voltage E may be maintained constant by the ZD, but the output terminal voltage BE of the bridge circuit 162 falls. The emitter output $E_0$ of the Tr also drops by the decrease in the BE.

When the entire level of the $E_0$ approaches to the trigger threshold value $V_{TR}$, even if the variation component contained in the $E_0$ is small, it momentarily drops lower than the $V_{TR}$. This is equivalent to the increase in the sensitivity for th variation component of the $E_0$. This increase in the sensitivity is useful to prevent the lighting of the fluorescent lamp 144 from becoming unstable due to the drop of the load applying voltage caused by the decrease in the line voltage.

More specifically, the lighting of the fluorescent lamp 144 starts to become unstable due to the decrease in the applying voltage, and even if flicker phenomenon does not yet occur in this case, a noise component slightly larger than that at normal lighting time is generated. This momentarily drops the $E_0$ lower than the

$V_{TR}$ due to the decrease in the entire level of the $E_0$ caused by the decrease in the line voltage, thereby starting the timer.

As a result, the voltage application to the load 138 side becomes full voltage (however, since the line voltage drops, it is lower than the initial $E_{in}$(V)), the flicker phenomenon is prevented in advance by the improper lighting of the fluorescent lamp 144.

If the line voltage further drops, the entire level of the $E_0$ further falls to eventually become lower than the $V_{TR}$, thereby starting the timer at this time. Thus, the applied voltage of the load 138 becomes full voltage, and when the fluorescent lamp 144 is being lit, it can prevent the lamp from improperly lighting due to the extreme drop of the applied voltage or the stop of lighting from occurring.

When the induction motor 144 is operating, it can prevent the cooling capacity from decreasing upon extremely decreasing of the applied voltage due to the long time of cooling the goods.

The timer 172 is adapted to immediately restart if the $E_0$ is still lower than the $V_{TR}$ after 7 sec. is elapsed to timeup from the start, and continues the phase control of the full voltage described above. When it is around 5 o'clock in the evening to drop the line voltage regularly in every day, the changeover switch 74 is shifted in advance to the R16 side to extend the timer time to 60 sec.

According to the fourth embodiment, the full voltage to continue the arbitrary predetermined time is applied when the induction motor of load side, the fluorescent lamp and the goods supplying mechanism. Therefore, smooth starting operation can be rapidly and effectively performed, and even if the line voltage drops during the operation, suitable operating state, stable operating state and reliable operating state can be effectively maintained.

In the embodiment described above, the DC voltage is obtained from the commercial power source. However, a battery may be used to strengthen the timer against the noise. A method of detecting the power source voltage may have, as shown in Fig. 14, the steps of providing two sets of the secondary windings of a transformer 180 for inputting the commercial power source $ACE_{in}$(V), producing the DC voltage CE similarly to the case of Fig. 12 by one winding 182, providing a diode bridge circuit 186, a large capacity capacitor C10, voltage dividers R30, R31 at the other winding 184, applying the divided voltage BE' through a predetermined resistor or directly to the base of the Tr of Fig. 12, or directly inputting to the TR terminal of the timer 172. In the latter case, one of the R30 and R31 is variable, and the detected voltage level of the trigger threshold value $V_{TR}$ may be regulated. The noise component caused by the start of the load side electric device or the operation of a load device such as a flicker of the fluorescent lamp is induced in a loop formed of the point between the resistors R30 and R31 or a line for coupling the TR terminal and the ground substrate, or crept through the ground substrate from the gate controller 142 to be superposed on the detected voltage. Therefore, since it is not necessary to provide the special circuit for detecting the noise component similarly to the case of Fig. 12, the construction is simple. However, a capacitor for passing a high frequency is provided between the main circuit and the base side or TR terminal side of the TR to be superposed with a simple construction. Further, a high frequency passing capacitor CO is connected in parallel with the R15 of Fig. 12 to increase the superposing amount.

In the embodiment described above, the phase control state of the $E_{out}$(small)85/100$E_{in}$(V) is returned to the full voltage $E_{out}$(large)=$E_{in}$(V). However, if the start of the load side electric device is preferable, it

may be approx. $E_{out}$(large)=90/100$E_{in}$(V). A method of returning to the 90/100$E_{in}$(V) can simply regulate by the set value of the R4 of Fig. 12. The construction of the gate control circuit is not limited to that of Fig. 12. For example, the operation compensating trigger circuit 192 having the same construction as that of the know start compensator is provided in the gate control circuit 190 as shown in Fig. 15. In the case of Fig. 15, switches 196 such as relay switches or thyristor switches are provided at both sides of the first capacitor C connected in parallel with the resistor R in the diode bridge 194 of the start compensator 192, and the switch 196 is controlled, for example, by the presence or absence of the voltage at both ends of the R21 of Fig 12. C' designates two capacitors. In this case, the variation in the effective value of the load applying voltage after the timer is started is shown in Fig. 16(1), and the case of Fig. 12 is shown in Fig. 16(a). If the line voltage drop due to the power consumption of general domestic is less, the circuit configuration after the Tr of Fig. 12 is used, as shown in Fig. 17, as a comparator 199 for comparing it with a predetermined reference level $E_{ref}$, and the switch 196 in Fig. 5 may be closed for a short time by the signal outputted from the comparator 1999 when the $E_0$ drops

lower than the $E_{ref}$ (corresponding to $V_{TR}$ in Fig. 12).

Fig. 18 is a circuit diagram showing a power-saving control system for an induction motor for driving a vending machine or a compressor of a refrigerating machine such as a refrigerator according to a fifth embodiment of this invention.

In Fig. 18, the power source of $ACE_{in}$(V) is connected through a voltage elevator 210 to the induction motor 212 of a load side. A compressor 214 for forming a refrigerating system (in Fig. 20) of a refrigerating machine is coupled as a mechanical load with the induction motor 212.

A voltage elevator 210 is a gate control circuit 223 which has a triac 216 of one type of an AC power control thyristor, a trigger circuit 218 having resistors R101, R210, a capacitor C101, SBS for performing a phase control by applying a trigger to the triac 216, and a phase control switching circuit 22.

The R201 is a variable resistor, which becomes minimum (conducting angle of substantially 100%) in the phase angle when the resistance value is zero, and the output of the phase control circuit 10 becomes substantially $E_{out}=E_{in}$(V). When the R201 is set to the predetermined value, the phase angle becomes the predetermined value to become an ordinary power-saving phase control state, and the output is dropped, for example, to $E_{out}$(small) -95/$E_{in}$(V).

In the embodiment in Fig. 18, when the motor is started in the state that the compressor of a mechanical load is coupled, a large starting current (several times or larger of the ordinary operation time) is flowed. Therefore, this current is utilized to detect the starting operation of the motor, certain time phase angle is minimized to apply a large voltage to prevent the starting from failing.

On the contrary, power is saved only during the period that the operation of the motor 212 is not obstructed.

More particularly, a starting operation detector 220 is provided in the main circuit, and a phase control switching circuit 222 for switching the phase control is connected as one example of the voltage elevation control circuit to the output side of the starting operation detector 220. The output side of the phase control switching circuit 222 is connected to the trigger circuit 218.

The starting operation detector 220 has a current detector 224 having a current transformer inserted in series with the main circuit or a small resistor for measuring the current, and a DC converter, and a comparator 226 for comparing in advance the output of the current detector 224 (the DC voltage substantially proportional to the current value) with the predetermined set level slightly larger than the current value when the motor 212 is ordinarily operated with the $E_{in}$(V) to output "high" level indicating during starting operation when the measured value is larger than the set level and "low" level indicating the operation stop or during the ordinary operation when smaller.

The "high" level of the comparator 226 is outputted to the phase control switching circuit 222 as a starting operation detection signal as a voltage rise command representing the power-saving rate reduction period (including the power-saving inhibiting period). The phase control switching circuit 222 has diodes D21 to D24 connected in a bridge in a predetermined direction at both ends of the R201 of the trigger circuit 218, an SCR inserted between the diodes D21 and D22, and between D23 and D24. and R301, R401 for supplying the output of the comparator 226 to the gate terminal of the SCR by dividing the output of the comparator 226.

The phase control switching circuit 222 turns ON the SCR while the comparator 226 outputs the "high" level to short the R2, performs the phase control at the minimum phase angle, uses the output of the voltage elevator 210 substantially as the voltage of $E_{out}$ (large) $E_{in}$ (V), and turns OFF the SCR while the comparator 26 outputs the "low" level to disconnect it from the R201. Then, the switching circuit performs the phase control at the predetermined power-saving phase angle to drop the output of the voltage elevator 210, for example, to $85/100E_{in}$ (V).

Then, the operation of the fifth embodiment will be described.

When the thermostat set to a predetermined place of the refrigerating machine is operated to close a switch SW11, a large starting current is initially flowed to the main circuit.

When the rise of the starting current exceeds $I_0$, the comparator 26 outputs a "high" level, the control switching circuit 22 shorts the R201 of the trigger circuit 218 to the minimum phase angle, and the voltage elevator 210 outputs the voltage of $E_{out}$ (large)= $E_{in}$ (V).

Thus, the power-saving operation is not performed during the starting operation of the motor 212, and the motor is smoothly started by continuously applying sufficient voltage to the smooth starting operation of the $E_{in}$ (V).

When the rotating speed rises by the start of the motor 212, the starting current decreases. When the speed approaches to that of the ordinary operation to drop to the staring current $I_{01}$, the output of the comparator 226 becomes "low" which designates the power-saving enabling period, and the phase control switching circuit 22 is disconnected from the trigger circuit 218.

Thus, the phase control circuit 210 becomes the phase control state at the ordinary phase angle. Therefore, the motor 212 is operated by the $E_{out}$(small)(V) during the ordinary operation of the motor 212 to save the power as compared with the case that the motor is operated ordinarily by the $E_{out}$(large)(V).

The operation of the motor 212 is performed until the switch SW11 is opened by the operation of the thermostat.

According to the fifth embodiment, the starting operation period of the motor 212 is effectively detected to apply the high voltage to the motor. Therefore, the motor does not occur a rotation lock to be started in a short time, thereby shifting to the power-saving ordinary operation.

After the SW11 is closed, the low voltage is applied until the starting current becomes a peak or exceeds the peak to initiate starting to suppress the peak of the starting current, and the high voltage may be then applied thereafter until the motor starts the ordinary operation.

When the power-saving rate is reduced, the $E_{out}=E_{in}(V)$ is not always set, but $95/100E_{in}(V)$ or 90/100V may be, for example, applied to the motor. Further, the thyristor may not employ the triac but other element such as an SCR, the trigger circuit may employ C, R and SBS, and may employ a reed relay, a photocoupler, a pulse transformer, IC or transistors, and high sensitivity triac, and may switch the phase angle to the two stages of the minimum angle and the ordinary power-saving phase angle.

Fig. 19 is a circuit diagram showing a dimming or power-saving control system for a glow type fluorescent lamp according to a sixth embodiment of this invention.

In the sixth embodiment, a voltage elevator 210 has a triac 216, a first trigger circuit 218 for performing a phase control at the ordinary phase angle, and a second trigger circuit 234 for performing a function of a switch at the triac 216.

The second trigger circuit 234 has a resistor $301 and a reed relay 236. When "high" level is input to the transistor Tr1 of the reed relay 236, its contact 238 is closed, and when the SW12 of the load side is closed, the triac 216 is always turned ON to output the

$E_{out}$(large)=$E_{in}$(V), and when the input of the transistor Tr1 is "low" level, its contact 238 is opened to disconnect the second trigger circuit 234 from the triac 216. At this time, the triac 216 receives a phase control at the ordinary phase angle by the first trigger circuit 218.

C2, R4 are a bypass circuit 240, when the first trigger circuit 218 performs a phase control, the first trigger circuit supplies power to the fluorescent lamp implement 242 during OFF period of the triac 216 in each cycle to fire a discharge tube, thereby flowing a small current to prevent an unstable lighting or flicker generated when the voltage dropped simply by the phase control is applied to the ordinary glow type fluorescent lamp to largely dim or power-save without applying unpleasant feeling to a personnel.

An ordinary operation detector 244 is provided in the main circuit. This detector 244 has a current detector 246 having a DC converter which has a current transformer or a small resistor and a capacitor inserted to the main circuit, and a comparator 248 which outputs "low" level when the output of the current detector 248 drops lower than the predetermined level $I_{02}$ slightly larger than the current value at the $E_{in}$(V) ordinary operation time of the fluorescent lamp implement 242 preset at the output of the current detector 246 and "high" level when exceeds. An R-S flip-flop 250 set by the down edge which alters from "high" to "low" at the output of the comparator 248 is provided at the output side of the comparator 248.

The Q terminal of the R-S flip-flop 250 is connected to the base side of the Tr1 to control the reed relay 236.

The operation of the sixth embodiment will be described.

The R-S flip-flop 250 is reset by the down edge appled to the reset terminal when the SW12 is OFF or during the OFF, and the Q terminal output is set to "high". When the SW12 is opened, the Tr1 of the reed relay 236 is conducted, and the relay coil 252 is excited. Therefore, its contact 238 is closed, and when the main circuit is closed, the triac 216 becomes normally ON state.

Thus, when the SW12 is closed to initially light the fluorescent lamp implement 242 as a starting operation, the high voltage of $E_{out}$(large)=$E_{in}$(V) is applied to the fluorescent lamp implement 242. The heating of the filament and the generation of high kick voltage due to the opening and closing of the contact of the glow lamp are necessary at the initial lighting of the flow type fluorescent lamp, but if the load side applying voltage when the SW12 is closed becomes, for example, much lower than the $E_{in}$(V) with respect to the fluorescent lamp implement 242 of the rated $E_{in}$(V), the lamp implement might fail to initially light with the insufficient voltage.

In the embodiment of Fig. 19, since the voltage of $E_{in}$(V) is appled from the initial of the ON of the SW12, the flow lamp and the safety unit are effectively operated to perform the initial lighting operation.

A relatively large starting current is flowed to the main circuit at the initial lighting time, and when the initial lighting is completed to shift to the ordinary lighting, the current is converged to the relatively small steady current.

The comparator 248 outputs "high" level from when the starting current exceeds $I_{02}$ immediately after the initial lighting is initiated, then the initial lighting operation is substantially finished, and to when the starting current drops lower than the $I_{02}$. The Q output of the R-S flip-flop 250 remains "high" during this period.

When the initial lighting is substantially finished and the starting current drops lower than the $I_{02}$, the output of the comparator 248 shifts from "high" to "low", the R-S flip-flop is set by being energized by the down edge, and the Q output is shifted from "high" to "low" to indicate during the ordinary operation.

Thus, the Tr1 of the reed relay 236 becomes nonconductive, the relay coil 252 is deenergized to open its contact 238 to disconnect the second trigger circuit 234 from the triac 216. Therefore, the triac 216 falls the phase control of the first trigger circuit 216, and supplies, for example, the low voltage of $E_{out}$(small)=85/100$E_{in}$(V) to the fluorescent lamp implement 242 at the power-saving ordinary phase angle preset by the regulation of the R2.

As described, the ordinary operation (ordinary lighting) of the fluorescent lamp 242 is performed by the low voltage to perform dimming or power-saving.

While the fluorescent lamp is lit by the low voltage of $E_{out}$(small)(V), the bypass circuit 240 operates to prevent unstable lighting or flickering.

This sixth embodiment detects the ordinary operation and then performs dimming or power-saving control to apply the lower voltage than the rated voltage.

Fig. 20 is a circuit diagram showing the power-saving control system for a refrigerating machine of a vending machine according to seventh embodiment of this invention.

The seventh embodiment has a trigger circuit 218 for performing a phase control at the power-saving ordinary phase angle with a triac 216, an induction motor 212 for driving a compressor 214 of a refrigerating system at the load side of a voltage elevator 212 of a shorting circuit 270, and an ordinary chilled air circulating fan motor 264 provided oppositely to an evaporator 262 for forming part of the refrigerating system provided in a refrigerating chamber 260 for containing goods such as can juices, as connected in parallel.

More specifically, as described above, the power-saving is performed by supplying the low voltage of $E_{out}$(small)=85/100$E_{in}$(V) to the motor 212 during the operation of the motor 212 to power-save the motor 212 in the amount dropped from the $E_{in}$(V), additionally reducing the voltage supplied to the fan motor 264 of rated $E_{in}$(V) to decelerate the rotating speed of the fan motor 264 (since the fan has square characteristic of the rotating speed/torque, if the voltage drops, the rotating speed also decelerates), reducing the circulating amount along the chamber wall 266 of the refrigerating chamber 260 to weaken the heat exchange generated to the atmospheric air of the high temperature side through the chamber wall 266, and shortening the one operation time of the motor 212 by suppressing the temperature rise of the goods once cooled to increasing the operating interval.

The SW1 provided in the motor 212 opens and closes by the operation of the thermostat (not shown). The SW13 provided in the fan motor 264 opens when the door of the refrigerating chamber 260 is opened (not shown) to fill goods, and closes when closed.

SW14 connected together with R501 opens or closes between the DC power source and the ground in cooperation with the opening or closing of the SW13, and the operation detection signal of the fan motor 264 which becomes "high" when the SW13 is closed and "low" when opened is outputted to the starting operation detector 268 of the motor 212 to be described in detail later.

A shorting circuit 270 is connected in parallel with the triac 216 in the main circuit. The shorting circuit 270 has a triac 272 provided in parallel with the triac 216, and a photocoupler type trigger circuit 273 for controlling the switching operation of the triac 272.

This trigger circuit 273 has R601, LED, R701 connected in series with both ends of the triac 272, and R801, CdS, Tr2 connected in series between the DC power source and the ground, and the gate terminal of the triac 272 is connected between the CdS and the R701.

When the base of the Tr2 becomes "high" level, the LED emits a light to reduce the resistance of the CdS, and when a current is flowed through the R601 to the gate of the triac 272 to close the SW11 or SW13, the triac 272 is always turned ON. In this case, since the both end voltage of the triac 216 is zero, the triac 216 side is OFF, and the $E_{out}$(large)=$E_{in}$(V) is applied to the load side. On the contrary, when the base of the Tr is "low" level and the triac 272 is always OFF, the voltage varying circuit 270 is disconnected from the main circuit. Therefore, the triac 216 performs the phase control at the predetermined phase angle to apply, for example, the $E_{out}$(small)=85/100$E_{in}$(V) to the load side.

A starting operation detector 268 for detecting the power-saving rate reduction period is further provided in the main circuit. This circuit 268 has, similarly to the fifth embodiment, a current detector 224, a first comparator 226, a second comparator 274 for comparing the output of the current detector 224 with the predetermined current level $I_{03}$ preset to higher than the $I_{01}$ at the load current of the fan motor 265 to output a high level when the detected current exceeds

the $I_{03}$, an AND 278 for switching the outputs of the first and second comparators 226, 274 in response to the operation or stop of the fan motor 264 to input the outputs of the second comparator 274 and the SW14 to output to the Tr2, an AND 280 for inputting the output of the first comparator 228 and the signals inverted by the inverter 278 from the output of the SW14, and an OR circuit 282 for inputting the outputs of the ANDs 276, 280 to output through the R801 to the Tr2.

The operation of the seventh embodiment will now be described.

It is assumed that the SW11 is initially opened, and the SW13 is closed. At this time, the fan motor 264 is rotated, and a current is flowed to the main circuit, but since it is much smaller than the $I_{01}$, the outputs of the first and second comparators 228, 274 are "low" in the power-saving enabling period, thus the Tr 2 is nonconducted, and the triac 272 is always OFF.

More particularly, the power-saving voltage dropped to the $E_{out}$(small) is applied to the load side upon receiving of the phase control of the triac 216. The fan motor 264 rotates at a lower speed than the case that operated by the $E_{in}$(V) to reduce the circulating amount of chilled air, but sufficient to uniformly cool the goods in the refrigerating chamber 266.

As described above, in order to suppress the heat exchange with atmospheric air generated through the chamber wall 266, the temperature of the goods hardly rises, and the operability of the motor 212 drops, thereby performing the power-saving.

When the thermostat operates in this state to close the SW11, the motor 212 starts initiating. If the voltage applied to the motor 212 is low to the $E_{out}$(small)=25/100$E_{in}$(large), the motor causes a rotation lock. Therefore, in order to avoid this lock, the power-saving rate is reduced as below to apply the full voltage of the $E_{out}$(large)=$E_{in}$(V) to the motor 212 during the starting operation of the motor 212.

More specifically, a large starting current is flowed to the main circuit due to the start of the motor 212 in addition to the load current of the fan motor 264. When the current of the main circuit exceeds the $I_{01}$, $I_{03}$ by the rise of the starting current, the outputs of the first and second comparators 226, 274 become "high"

Since the SW14 is closed in advance by the closure of the SW13 and the AND 276 side is selected, when the output of the second comparator 274 becomes "high", "high" level is applied to the Tr2 from the AND 278 through the OR 282 to conduct the Tr2. Thus, the LED emits a light to reduce the resistance of the CdS, thereby always turning ON the triac 272.

The $ACE_{in}$(V) is applied to the load side as it is, and the motor 212 obtains a large torque to smoothly start. As the starting operation advances, the rotation of the motor 212 rises, and the starting current then decreases. When the starting current decreases lower than the $I_{03}$ near the completion of the starting, the second comparator 274 becomes "low", the power-saving rate reduction period is finished to conduct the Tr2, thereby always turning OFF the triac 272,

Thus, the motor 212 is then ordinarily operated with the low voltage of $E_{out}$(small) (V), thereby performing the power-saving by the operation itself of the motor 212.

The motor 212 continues operating until the SW11 is opened by the operation of the thermostat. When the door is opened to fill the goods in the refrigerating chamber 266 during the operation of the motor 212, the SW13 is opened to reduce the current value flowed to the main circuit.

Then, the thermostat is operated in the state that the SW13 and SW11 are both opened, and when the SW11 is closed, the motor 212 starts to flow a large starting current.

However, in this case, the current value is smaller in the amount that the fan motor 264 is stopped. When the current values exceeds the $I_{01}$, $I_{03}$ during the rising of the starting current, the first and second comparators 226, 274 output "high". Since the SW13 is opened this time, the AND 280 side is selected, and when the output of the first comparator 226 becomes "high", "high" level is applied from the AND 280 through the OR 282 to the Tr2 to conduct the Tr2.

Thus, the triac 272 always turns ON, the voltage of 100V dropped in the power-saving rate is applied to the motor 212 to smoothly start the motor.

As the rotating speed of the motor 212 rises, the current value gradually decreases. When approaching to the ordinary operation, the current value drop lower than the $I_{01}$, and the output of the first comparator 228 then alters to "low" to nonconduct the Tr2, thereby always turning OFF the triac 272. Therefore, the motor 212 is ordinarily operated by the low voltage of the $E_{out}$(small)(V) by the triac 216 to perform the power-saving.

According to the seventh embodiment, a plurality of loads are provided in parallel, and even if the detection of the load current of sole motor at the load side is difficult, substantially the entire starting operation period of the motor can be effectively grasped irrespective of the application or release of the other load, thereby rapidly staring. The shorting circuit 270 may be formed of a mechanical relay or a transistor switch.

Fig. 21 is a circuit diagram showing an eighth embodiment according to this invention. This eighth embodiment shows the case of the parallel connection for performing the power-saving by an induction motor 212 for driving a compressor 214 at the load side, and a glow type fluorescent lamp implement 242.

In Fig. 21, reference numeral 283 designates a starting operation detector for a fluorescent lamp. In other words, a SW15 which cooperates with the opening and closing of a lighting SW12 of a fluorescent lamp implement 242 and a resistor R901 are connected between a DC power source and the ground, and when the SW15 is closed, a signal signal which shifts from "high" to "low" is input to the set terminal of a down edge trigger type R-S flip-flop 284.

A starting operation finish detector 288 formed similarly to the ordinary operation detector 244 in the seventh embodiment is proviced in a fluorescent lamp side power supply lien 286, and the output of the detector 288 is input to the reset terminal of the R-S flip-flop 284.

Therefore, when the SW12 is closed, the R-S flip-flop 284 is set to output "high" level from the Q terminal, while when the starting current drops lower than the predetermined level $I_{02}$ as the initial lighting operation approaches the finish after the SW12 is closed, it is reset by the output variation from "high" to "low" of the starting operation finish detector 288 to output "low" level from the Q terminal.

Accordingly, the "low" output of the R-S flip-flop 284 represents the power-saving enabling operating period. In other words, the SW16 which cooperates with the opening and closing of the SW11 for turning ON the power source to the motor 212 and the R110 are connected between the DC power source and the ground, and when the SW16 is closed, the switch signal shifted from "low" to "high" is input to one input terminal of the AND 291.

A rotating speed detector 2929 is provided on a rotational shaft of the motor 212 to outputs a rotating speed detection signal which increases or decrease at the voltage level according to the high or low of the rotating speed.

This rotating speed detection signal is outputted to a comparator 294, and when exceeding a predetermined reference speed level $N_0$ slightly smaller than the rotating speed when rotated normally with the $E_{in}$(V) in advance (where $N_0$ may be higher or lower than the rotating speed at ordinary operation time with the $E_{out}$(small) (V), but described in case of low value in the embodiment), the comparator 294 outputs "low" level to the AND circuit 291.

The "low" output of the AND circuit 291 represents the power-saving enabling operating period.

The output sides of the R-S flip-flop 284 and the AND 291 are connected through an OR circuit 298 and a photoisolator 297 to the phase control switching circuit 222. The "low" output of the OR circuit 296 becomes the power-saving enabling period when observing the entire load side. A voltage elevator 300 provided in the main circuit has a triac 216, a trigger circuit 302 with a hysteresis preventing circuit having R111, R112, D15 to D18, and a phase control switching circuit 222. The both ends of the R201 are shorted by the phase control switching circuit 22 as a power-saving rate reduction period (voltage rising period) while any of the fluorescent lamp 242 or the motor 212 applied with the power source is not power-saving enabling period but outputted with "high" level from the OR circuit 296. Thus, the triac 216 is phase-controlled by the minimum phase angle, and supplies the full voltage of the $E_{in}$(V)

to the load side. Therefore, the load closed with the SW11 or SW12 is operated with the $E_{in}$(V).

On the contrary, when the fluorescent lamp 242 energized with the power source is in the power-saving enabling period together with the motor 212 and while "low" level is outputted from the OR circuit 298, the phase control regulating circuit 22 is disconnected from the trigger circuit 302. Therefore, it is phase-controlled at the predetermined phase angle so that the supplied voltage of the load side becomes low to the $E_{out}$(small) 85/100$E_{in}$(V) to perform the power-saving.

Then, the operation of the eighth embodiment will be described. From when the motor 212 starts rotating by closing the SW11 to when the motor arrives at the predetermined rotating speed $N_0$ near that at ordinary operating time with the $E_{in}$(V), the output of the SW16 is "high", the output of the comparator 294 is "high", and the AND circuit 291 outputs "high" level.

Therefore, the "high" level which represents the power-saving rate reduction period is outputted from the OR circuit 296 through the photoisolator 297 to the phase control switching circuit 222 irrespective of the lighting or extinguishing of the fluorescent lamp 242 side, the R201 is shorted to perform a phase control at the ordinary phase angle to the voltage elevator 300.

Thus, the voltage of the $E_{in}$(V) dropped in the power-saving rate is applied to the load side to smoothly start the motor 212. When rotating speed exceeds the $N_0$, the output of the comparator 294 becomes "low", and the output of the AND circuit 291 becomes "low". Therefore, when the fluorescent lamp 242 side is during extinguishing or during the powers-saving enabling period, the output of the OR circuit 296 becomes "low" which represents the power-saving enabling period, and the phase control switching circuit 22 is disconnected from the R201. Thus, the output of the voltage elevator 300 becomes the $E_{out}$(small)=85/100$E_{in}$(V), and the motor 212 performs the power-saving operation.

The case that the fluorescent lamp 242 is lit is similar, the output of the R-S flip-flop 284 becomes "high" from when the SW12 is closed to when the initial starting operation is substantially finished, the OR circuit outputs "high" level which represents the power-saving rate reduction period to become the high supply voltage of the $E_{in}$(V).

When entering the ordinary lighting and the output of the R-S flip-flop 284 becomes "low", if the motor 212 side is during stopping or during power-saving enabling period, the output of the OR circuit 296 becomes "low", and the voltage of the load side is reduced to the $E_{out}$(small), and the fluorescent lamp 242 performs the power-saving lighting.

According to the eighth embodiment, even when a plurality of electric devices provided in parallel fail to start at a low voltage, the power-saving rate is reduced during the starting operation to apply the high voltage. Therefore, the devices can be effectively started, and the power-saving can be performed during the ordinary operation. C301, R113 are snubber circuit, and L11, C401 are a noise cut filter.

Fig. 22 is a circuit diagram of the essential portion of the ninth embodiment of this invention. This ninth embodiment prevents, for example, flicker during the ordinary lighting of the fluorescent lamp 242 in Fig. 21 to set the quasi-power-saving enabling period in the phase control state of the $E_{out}$(small)-90/100$E_{in}$(V).

The AND of the invention of the switch signal of the SW15 and the starting operation finish detector 288 is taken by an AND circuit 205 to detect the ordinary operating period.

Then, R201 in the trigger circuit 300 is divided into $R201_1$, $R201_2$, a phase control switching circuit 206 is connected to one $R201_2$, and when the output of the OR circuit 296 is "low" during the ordinary operation of the fluorescent lamp 242, the "high" output of the AND circuit 306 is fed as the quasi-power-saving enabling period through a photoisolator 208 to a phase control switching circuit 206 to short the $R201_2$ by the conduction of the SCR, thereby switching the phase angle to the intermediate value between the minimum value and the ordinary value as the quasi-power-saving state of the $90/100E_{in}$(V).

In the ninth embodiment, a shallow-power-saving rate is obtained during the lighting of the fluorescent lamp 242, but applied to the case that the lighting period of the fluorescent lamp 242 is short.

Fig. 23 is a circuit diagram of a power-saving control system for a vending machine according to the tenth embodiment of this invention. This tenth embodiment has an induction motor 212 for driving a compressor 214 to the load side, a fan motor 264, a good supplying mechanism (coin mechanism) 310, a microcomputer 312 for controlling the sections of the vending machine, and money dispenser 314 having a money not identifier.

The microcomputer system 312 and the money dispenser 314 receives power source from a common DC voltage source converted to a constant DC voltage at the load side.

In Fig. 23, the switch signal of SW16 which cooperates with the closure of the SW11 of the motor 212 is outputted to the AND circuit 316. A refrigerating gas pressure detector 318 is provided at the exhaust side of the compressor 214 of the refrigerating system, and a comparator 320 for outputting "high" level to the output side of the pressure detector 318 when the detected pressure arrives at slightly lower pressure $P_0$ than the ordinary pressure at the operating time of the rated $E_{in}$(V).

The output side of the comparator 320 is connected to the AND circuit 318.

A starting operation detector 322 for obtaining the power-saving rate reduction period in the motor 212 is composed of the SW16, the pressure detector 318, the comparator 320 and the AND circuit 316.

The output side of the starting operation detector 322 is connected through an OR circuit 296 and a photoisolator 297 to a phase control switching circuit 22.

Since the "high" level is outputted from the OR circuit 296 during the starting operation of the motor 212, the voltage of the $E_{out}$(large)=$E_{in}$(V) is applied to the load side to prove the smooth starting of the motor 212. The AND circuit 316 becomes "low" level immediately before the motor 212 enters the ordinary operation, the output of the OR circuit 296 becomes "low" under the condition that all other loads are not power-saving rate reduction period, and the power-saving voltage of the $E_{out}$(small)=85/100$E_{in}$(V) is, for example, applied as the power-saving enabling period during the ordinary operation.

Goods supplying mechanism 310 has a small-sized motor to push goods selection switch 324, and when the selection signal is applied to the microcomputer system 312. the microcomputer system 312 closes the switch SW17 such as a relay switch to energize the good supplying mechanism 310 to externally supply the goods.

When the goods supply completion signal is fed from the goods supply detector 326 to the microcomputer system 312, the microcomputer system 326 opens the switch SW17.

When the installing environment of the vending machine is wrong and not fully clarified, the power-saving voltage of the $E_{out}$(small)=85/100$E_{in}$(V) might become impossible to supply the goods due to engagement of the goods in the midway caused by dusts clogged in the good supplying mechanism 310.

In this embodiment, the microcomputer 312 controls to open or close the switch SW17 to input the signal outputted (opened at "high" level and closed at "low" level) to the OR circuit 296, and to set the power-saving rate reduction period while the good supplying mechanism 310 is operated.

Thus, while the SW17 is closed, the high voltage of the $E_{in}$(V) is applied, thereby eliminating the possibility of the goods to be engaged in the midway during the supplying of the goods.

The money note identifier of the money dispensor 314 is weak for high frequency noise generated when the triac 216 is turned ON and OFF. Therefore, in the embodiment, a money note identifier operating period detector 329 for detecting the operating period of the money note identified is provided in the money dispenser 314, "high" level is inputted to the OR circuit 296 during the operation to set the power-saving rate reduction period during the money note identifying. When the triac 216 always becomes substantially ON, no high frequency noise is generated.

In this embodiment, a line voltage drop detector 330 for detecting the decrease of the $ACE_{in}$(V) power source by inputting the $ACE_{in}$(V) is provided. The line voltage drop detector 330 inputs the voltage preset from the line voltage such as, for example, $94/100E_{in}$(V)

(where the $E_{in}$ is lower than the rated voltage of the power source) the "high" level to the OR circuit 298 during the period, applies the full voltage of the $E_{in}$(V) as the power-saving rate reduction period, avoids the extreme voltage drop, eliminates the improper operation of the load side device, or prevents the state for increasing the power consumption.

When a heater for the chamber is mounted in parallel with the load side of the type for performing the phase control synchronously with the current phase, a thermostat is operated as shown in Fig. 24 to close SW18, and when the heater 322 is energized, the phase that the current becomes zero is advanced. Therefore, the voltage applied to the load side is raised, for example, to 91/100 to deteriorate the power-saving rate.

In order to prevent this, R201 of the trigger circuit 302 is composed of $R202_1$, $R202_2$, a phase control switching circuit 340 is connected to phase control switching circuits 222, $R202_2$ in the entirety of $R20_1$, $R202_2$, SW19 cooperating with the SW18 is provided, and when the SW18 is opened, "high" level is outputted and when closed, "low" level is outputted through the photoisolator 334 to the phase control switching circuit 340, and when the heater 332 is energized, the phase angle may be delayed in the amount of $R202_2$ to obtain

substantially the same voltage $E_{out}$(small)=85/100$E_{in}$(V) as the dropped voltage 85/100$E_{in}$(V) at nonenergizing time.

The noise countermeasure of the abovementioned triac 210 is particularly effective in the case that the heater load 332 is provided in parallel with the load side.

When the heater load is energized in the type for performing the phase control in the synchronizing type, the voltage applied to the load side decreases. As required, the phase may be advanced during the heater load energizing contrary to the above case.

In the embodiments described above, it is returned to the $E_{in}$ at the voltage rising time, or may be returned, for example, to 90/100$E_{in}$, 95/100$E_{in}$ (V). The applied voltage may be stepwisely altered or continuously varied.

Fig. 25 is a circuit diagram showing the construction of the load side when the rotation control or power-saving control of the induction motor 402 for driving a blower 400 in a power controller used, for example, in Fig. 18. When R201 in Fig. 18 is set variable, the rotating speed (blowing amount) or power-saving rate is altered.

Fig. 26 is a circuit diagram showing the construction of the load side when the rotation control or power-saving control of the induction motor 406 for driving a pump 404 is performed by a power controller used in Fig. 18. When R201 in Fig. 18 is set variable, the rotating speed (flow rate) or power-saving rate is altered.

INDUSTRIAL APPLICABILITY

Since the induction motor with a heavy mechanical load which is heretofore difficult to perform a rotation control or a power-saving control can be performed, the optimum control responsive to the state can be achieved for a blower, a compressor, a pump or other load. Since the initial lighting operation of a discharge lamp implement is proved, the labor of operating dimming or power-saving can be omitted.

CLAIMS

1. A power controller comprising:

power control means provided between a power source and a plurality of load side electric devices provided in parallel for controlling the power by a predetermined fixed or variable set value by dropping the power source voltage and supplying the dropped voltage to a load side,

operation detecting means for detecting the presence or absence of one or more types of operations of different types of one or more electric devices of the plurality of electric devices, and

power control regulating means for stopping the predetermined power control operation by the predetermined set value by the power control means to raise the supplied voltage by the output of the operation detecting means during the predetermined operation of any of the predetermined one or more electric devices and releasing the stop of the predetermined power control by the predetermined set value of the power control means when any of the predetermined one or more electric devices is not operated.

2. A power controller according to claim 1 wherein said operation detecting means comprises means for detecting the presence or absence of starting operation.

3. A power controller according to claim 1 wherein said operation detecting means comprises means for detecting the presence or absence of improper operation.

4. A power controller according to any of claims 1 and 2 wherein said one or more load side electric devices comprises one or more induction motors with mechanical load, and the predetermined power control performed by said power control means comprises a rotation control.

5. A power controller according to any of claims 1, 2 and 3 wherein said one or more load side electric devices comprises one or more induction motors with mechanical load, and the predetermined power control performed by said power control means comprises a power-saving control.

6. A power controller according to any of claims 1 and 2 wherein said one or more load side electric devices comprise one or more discharge tube illumination implements.

7. A power controller according to claim 3 wherein said one or more load side electric devices comprises one or more discharge tube illumination implements, and said means for detecting the presence or absence of the improper operation comprises means for detecting the presence or absence of flickers of one or more discharge tube illumination implements of the one or more discharge tube illumination implements during the predetermined power control.

8. A power controller according to claim 1 wherein said power control means for controlling the predetermined power comprises phase control means.

9. A power controller according to claim 8 wherein said power control regulating means comprises shorting means provided in parallel with said phase control means.

10. A power controller according to claim 9 wherein said power control regulating means comprises gate control means provided in said phase control means.

11. A power controller according to claim 2 wherein said means for detecting the presence or absence of said starting operation comprises means for detecting starting initiation, and a timer for producing a signal output during starting from the starting initiation until a predetermined set time is elapsed.

12. A power controller according to claim 2 wherein said means for detecting the presence or absence of said starting operation comprises means for detecting a starting initiation, and means for detecting a start finish.

13. A power controller according to claim 1 wherein said means for detecting the presence or absence of said starting operation comprises means for detecting a start finish, and means for detecting an operation stop.

14. A power controller according to any of claims 12 and 13 wherein said means for detecting the start initiation comprises means for detecting an electric variation occurred in a circuit upon energization of a power source.

15. A power controller according to any of claims 13 and 14 wherein said means for detecting the start initiation comprises means for detecting the closing operation of a power source energizing switch.

16. A power controller according to any of claims 13 and 14 wherein said means for detecting the start finish comprises means for detecting the reduction in the starting current.

17. A power controller according to claim 14 wherein said means for detecting the operation stop comprises means for detecting the electric variation occurred in a circuit upon deenergizing of a power source.

18. A power controller according to claim 14 wherein said means for detecting the operation finish comprises means for detecting the opening operation of a switch upon energizing of a power source.

19. A power controller comprising:

power control means provided between a power source and a plurality of load side electric devices provided in parallel for controlling the power by a predetermined fixed or variable set value by dropping the power source voltage and supplying the dropped voltage to a load side,

operation detecting means for detecting the presence or absence of the operation of predetermined one or more electric devices not to be power-controlled of said plurality of electric devices, and

power control regulating means for stopping the predetermined power control operation by the predetermined set value by the power control means during the operation of any of predetermined one or more electric devices not to be power-controlled to raise the supplied voltage by the output of the operation detecting means and releasing the stop of the predetermined power control by the predetermined set value of the power control means when any of the predetermined one or more electric devices not to be power-controlled is not operated.

20. A power controller according to claim 9 wherein said gate control means comprises, in addition to trigger means for the predetermined power control, a diode bridge for bridging a resistor and the first capacitor connected in parallel, includes trigger means having the diode bridge and second capacitor connected in series and a switch for discharging the first capacitor, and trigger means for operation compensation opened at the switch after said predetermined power control stop is released.

21. A power controller according to claim 8 wherein said means for detecting the presence or absence of the flicker comprises means for detecting the occurrence of the flicker, and a timer for producing a signal output during the improper operation from the occurrence of the flicker until the predetermined set time is elapsed.

22. A power controller according to claim 21 wherein said means for detecting the generation of the flicker comprises means for detecting electric variation generated in a circuit by the occurrence of the flicker.

23. A power controller according to any of claims 13 and 14, wherein said one or more load side electric devices comprise one or more induction motors with mechanical load, and said means for detecting the start finish is means for detecting the rise of the rotating speed.

24. A power controller according to claim 21 wherein said operation detecting means for detecting the presence or absence of said operation comprises detecting means of operation occurrence, and a timer for producing a signal output during operation from the operation occurrence until a predetermined set time is elapsed.

25. A power controller comprising:

power control means provided between a power source and one or plurality of load side electric devices provided in parallel for controlling the power by a predetermined fixed or variable set value by dropping the power source voltage and supplying the dropped voltage to a load side,

operation detecting means for detecting the presence or absence of the predetermined operation of predetermined one or more electric devices not to be power-controlled of said plurality of electric devices, and

power control regulating means for stopping the predetermined power control operation by the predetermined set value by the power control means during the predetermined operation of any of predetermined one or more electric devices not to be power-controlled to raise the supplied voltage by the output of the operation detecting means and releasing the stop of the predetermined power control by the predetermined set value of the power control means when any of the predetermined one or more electric devices not to be power-controlled is not operated as predetermined.

26. A power controller according to claim 25 wherein said one or more electric devices not to be power-controlled comprise an electronic circuit.

27. A power controller according to claim 26 wherein said electronic circuit comprises a digital circuit.

28. A power controller comprising:

power control means provided between a power source and a plurality of load side electric devices provided in parallel for controlling the power by a predetermined fixed or variable set value by dropping the power source voltage and supplying the dropped voltage to a load side,

operation detecting means for detecting the presence or absence of predetermined one or different types of operations of predetermined plurality of said plurality of electric devices, and

power control regulating means for stopping the predetermined power control operation with the predetermined set value by said power control means during the predetermined operation of any of said predetermined one or more electric devices to raise the supply voltage and releasing the stop of the predetermined power control by the preset value of said power control means when any of said predetermined one or more electric devices is not during the predetermined operation,

said power control regulating means altering the rising value of said supply voltage at every predetermined device of said predetermined plurality of electric devices.

29. A power controller comprising:

power control means provided between a power source and a plurality of load side electric devices provided in parallel for controlling the power by a predetermined fixed or variable set value by dropping the power source voltage and supplying the dropped voltage to a load side,

operation detecting means for detecting the power source voltage in the state including the electric variation component caused by the predetermined one or more operations of predetermined one or more load side electric devices of the one or more load side electric devices,

comparing means for comparing the power source voltage detection signal with a predetermined reference level,

a timer for outputting a timer signal from the input of the power source voltage detection signal until predetermined set time is elapsed on the basis of a signal outputted from the comparing means by the lower value of the reference level of the power source voltage detection signal, and

power control regulating means for stopping the predetermined power control operation by the preset value by the power control means during the outputting of the timer signal from the timer to raise the supply voltage and releasing the stop of the predetermined power control by the predetermined set value of said power control means when the timer signal is not outputted.

30. A power controller according to claim 29 wherein said power source voltage detecting means comprises unstable DC power source for said comparing means or (and) said timer.

31. A power controller according to claim 30 wherein said power source voltage detecting means comprises a level converting amplifying element at the output side.

32. A power controller according to claim 30 wherein said timer comprises a trigger circuit as said comparing means.

33. A power controller according to claim 31 wherein the ground of said unstable DC power source is coupled with a main circuit.

34. A power controller according to claim 30 wherein said timer is composed to enable to vary a set time.

35. A method of controlling power for supplying a voltage lower than a rated voltage to an induction motor coupled with a compressor to perform a power-saving.

36. A method of controlling power according to claim 35 wherein said compressor is for a refrigerating machine.

37. A method of controlling power for supplying a voltage lower than a rated voltage to an induction motor coupled with a pump to perform a power-saving.

FIG. 1

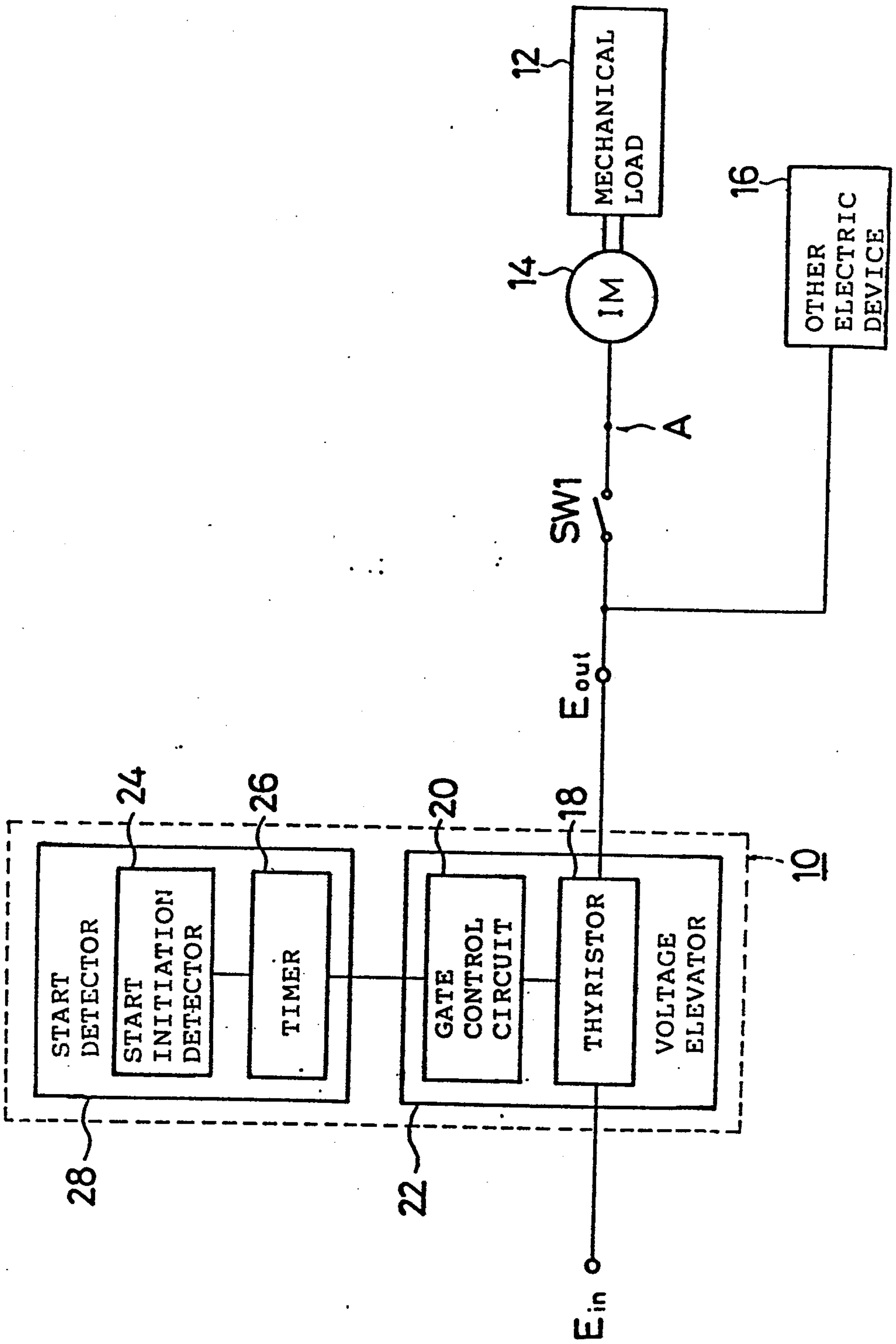
START DETECTOR
START INITIATION DETECTOR
TIMER
GATE CONTROL CIRCUIT
THYRISTOR
VOLTAGE ELEVATOR
MECHANICAL LOAD
IM
OTHER ELECTRIC DEVICE
$E_{in}$
$E_{out}$
SW1
A
10
12
14
16
18
20
22
24
26
28

FIG. 2

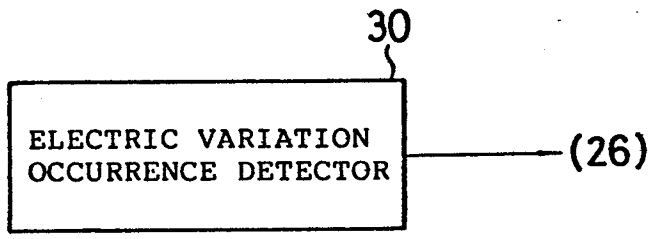


FIG. 3

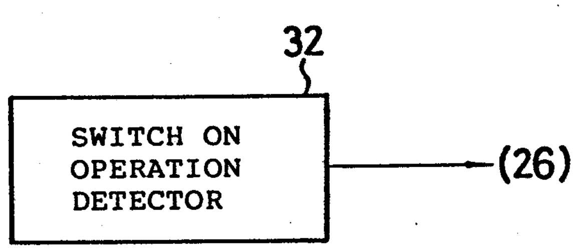


FIG. 4

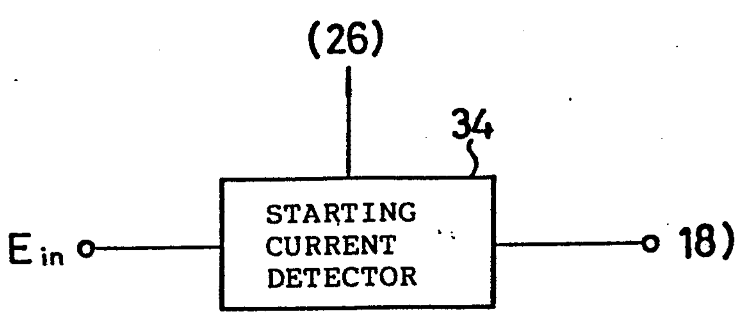

FIG.5

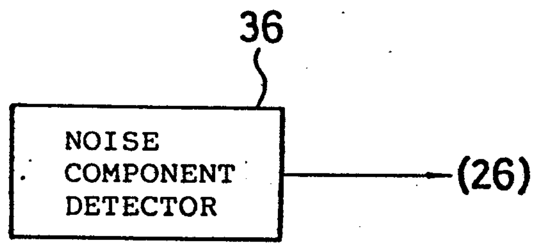


FIG.6

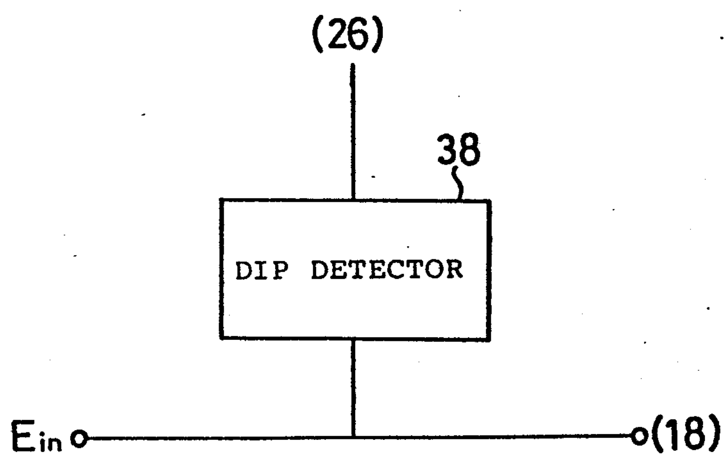

FIG.7

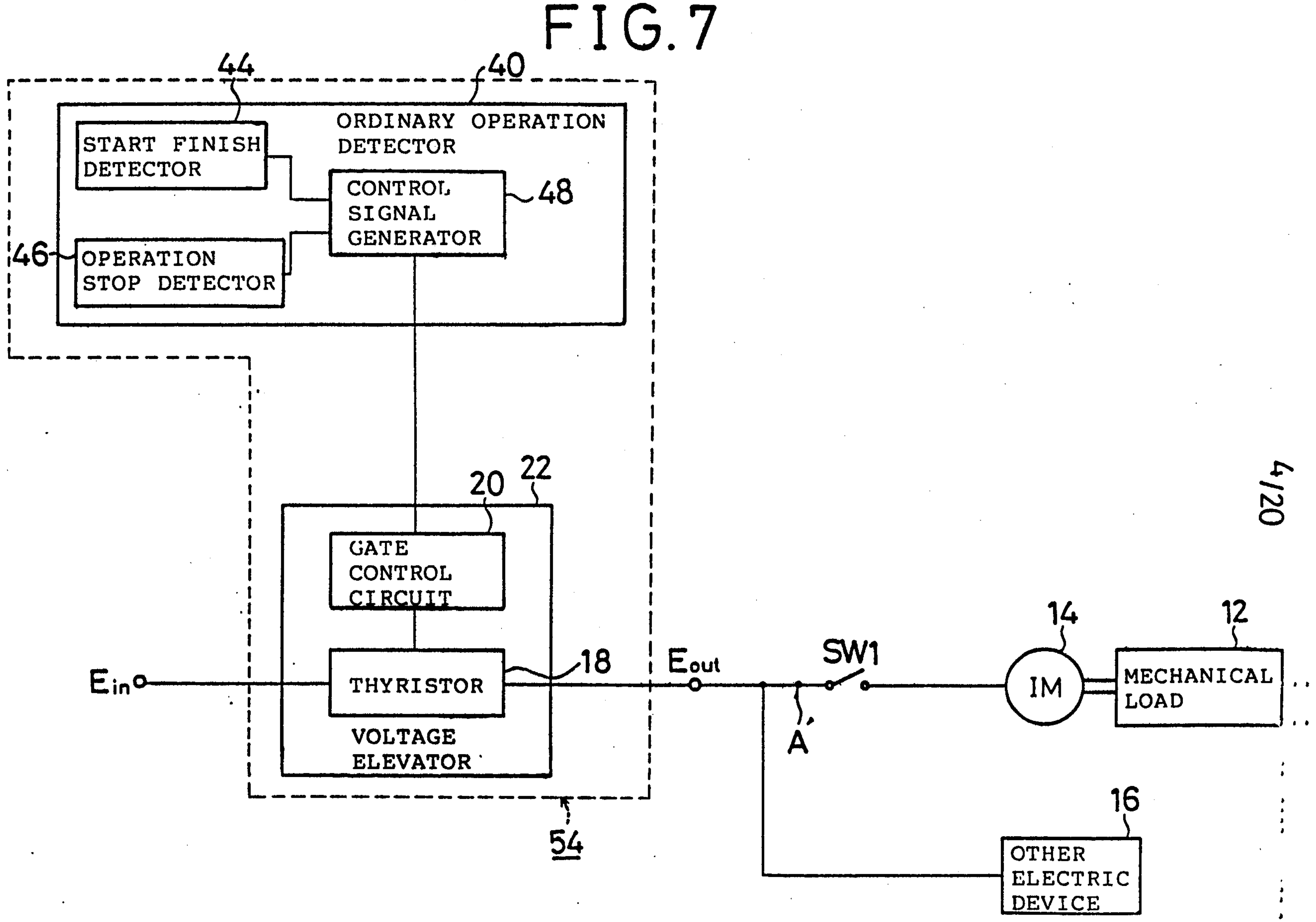

44
40
START FINISH DETECTOR
ORDINARY OPERATION DETECTOR
CONTROL SIGNAL GENERATOR
48
46
OPERATION STOP DETECTOR
20
22
GATE CONTROL CIRCUIT
THYRISTOR
18
VOLTAGE ELEVATOR
54
$E_{in}$
$E_{out}$
SW1
A
14
IM
12
MECHANICAL LOAD
16
OTHER ELECTRIC DEVICE

FIG. 8

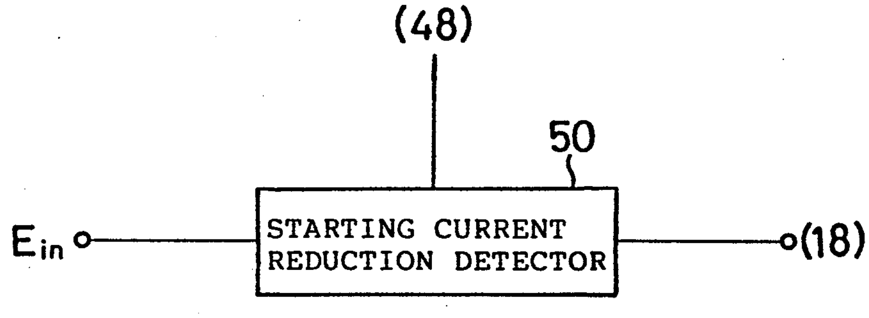
(48)
50
Ein
STARTING CURRENT
REDUCTION DETECTOR
(18)

FIG. 9

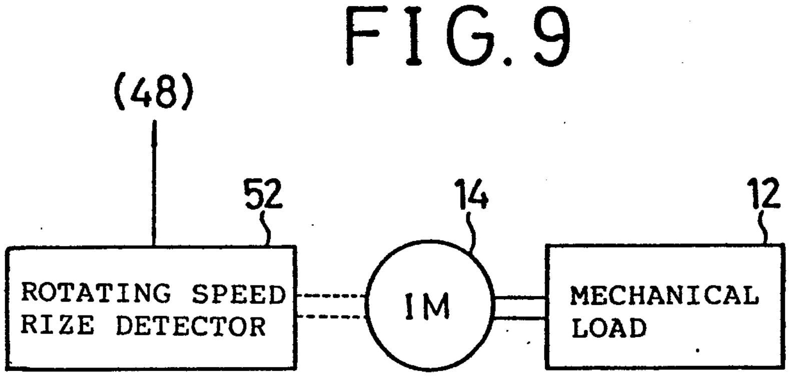
(48)
52
14
12
ROTATING SPEED
RIZE DETECTOR
IM
MECHANICAL
LOAD

FIG.10

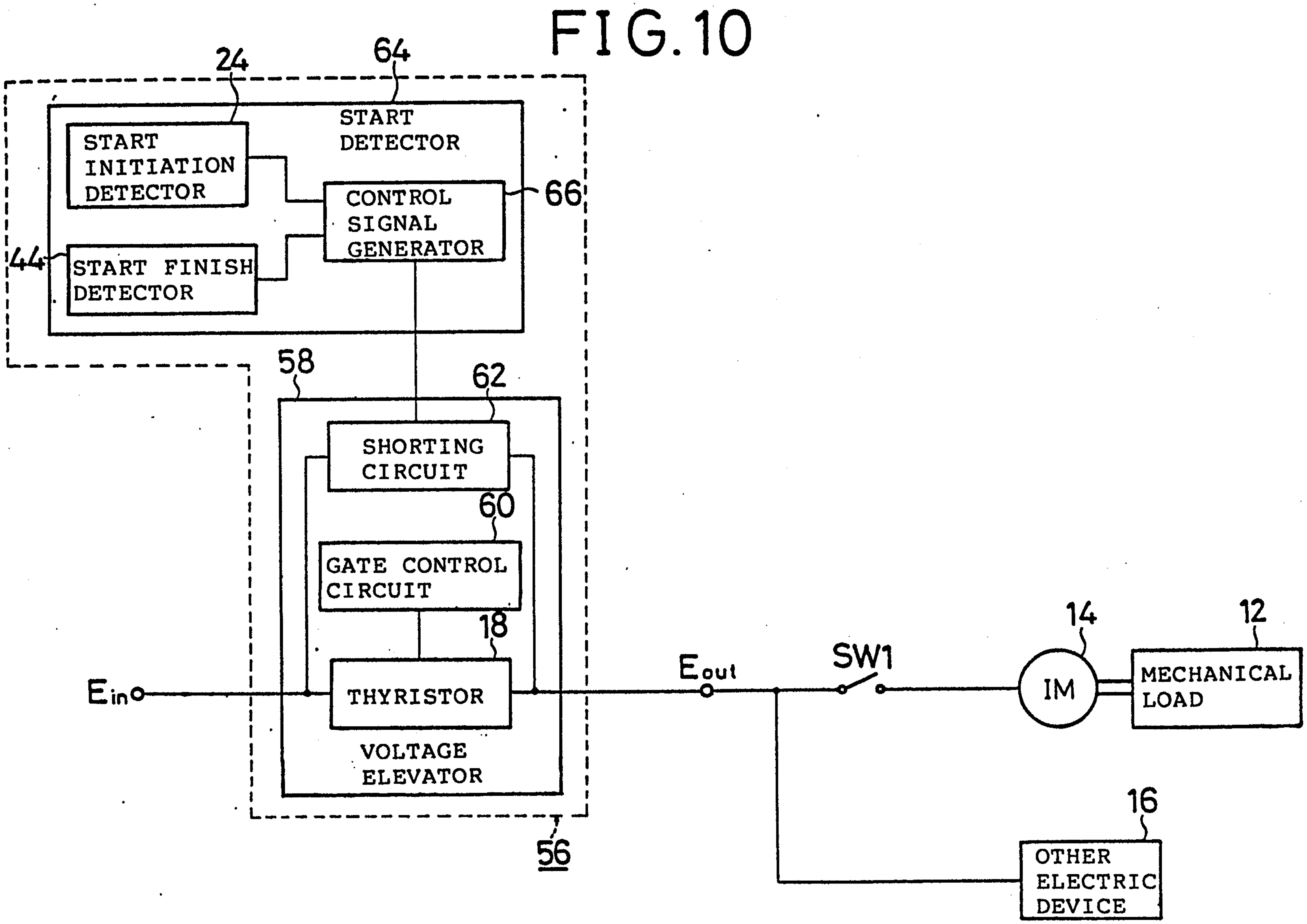
24
64
START DETECTOR
START INITIATION DETECTOR
CONTROL SIGNAL GENERATOR
66
44
START FINISH DETECTOR
58
62
SHORTING CIRCUIT
60
GATE CONTROL CIRCUIT
18
$E_{in}$
THYRISTOR
VOLTAGE ELEVATOR
56
$E_{out}$
SW1
14
IM
12
MECHANICAL LOAD
16
OTHER ELECTRIC DEVICE

FIG.11

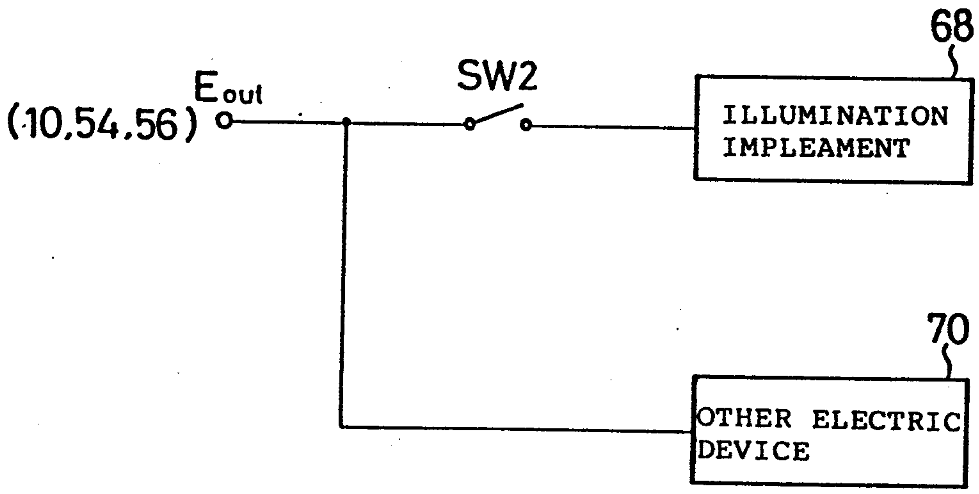

(10,54,56)
$E_{out}$
SW2
68
ILLUMINATION IMPLEAMENT
70
OTHER ELECTRIC DEVICE

# FIG.12

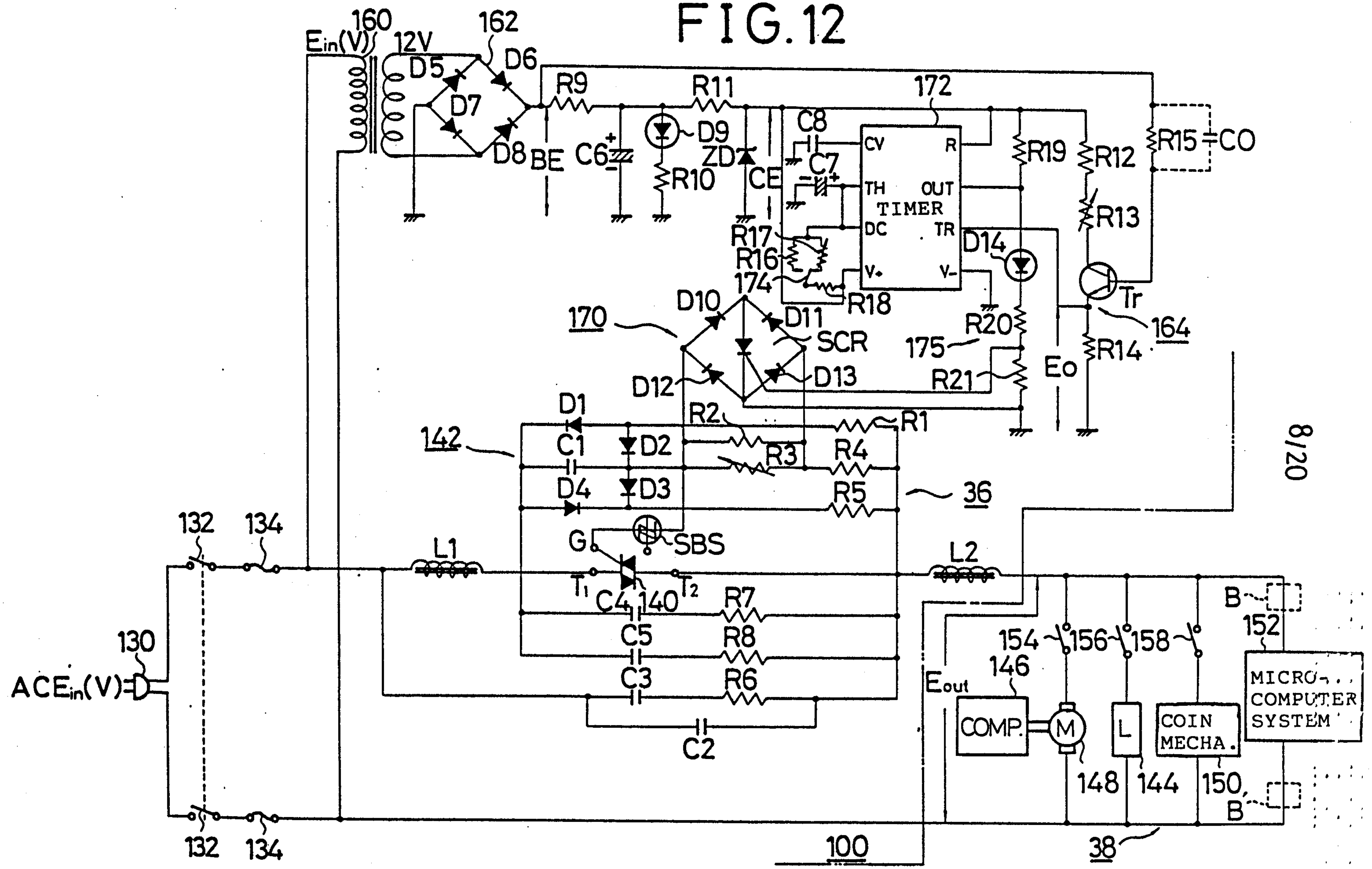

Ein(V)
160
12V
162
D5
D6
D7
D8
BE
R9
C6
D9
R10
R11
ZD
CE
C8
C7
172
CV
R
TH
OUT
TIMER
DC
TR
V+
V-
R17
R16
174
R18
R19
R12
R13
R15
CO
D14
R20
175
R21
Tr
164
R14
Eo
170
D10
D11
SCR
D12
D13
D1
142
C1
D2
R2
R3
R1
R4
D4
D3
R5
36
G
SBS
130
ACEin(V)
132
134
L1
T1
C4
140
T2
L2
R7
C5
R8
C3
R6
C2
Eout
100
154
156
158
B
152
146
COMP.
M
148
L
144
COIN MECHA.
150
MICRO-COMPUTER SYSTEM
38

FIG.13

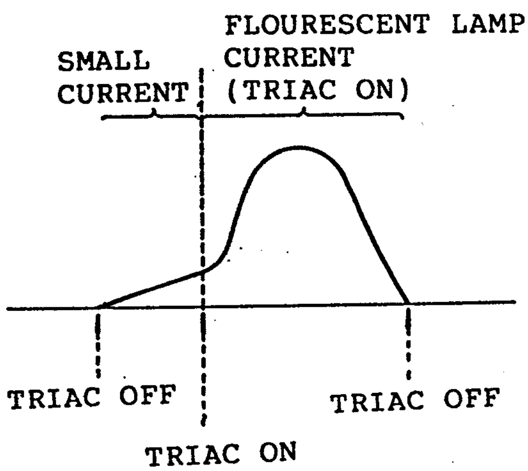
FLOURESCENT LAMP CURRENT (TRIAC ON)
SMALL CURRENT
TRIAC OFF
TRIAC ON
TRIAC OFF

FIG.14

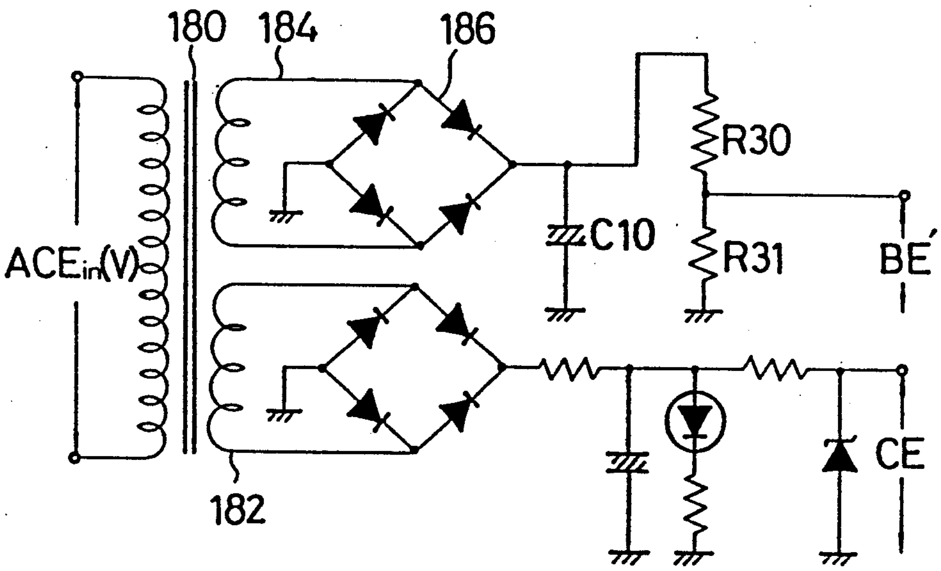


FIG.15

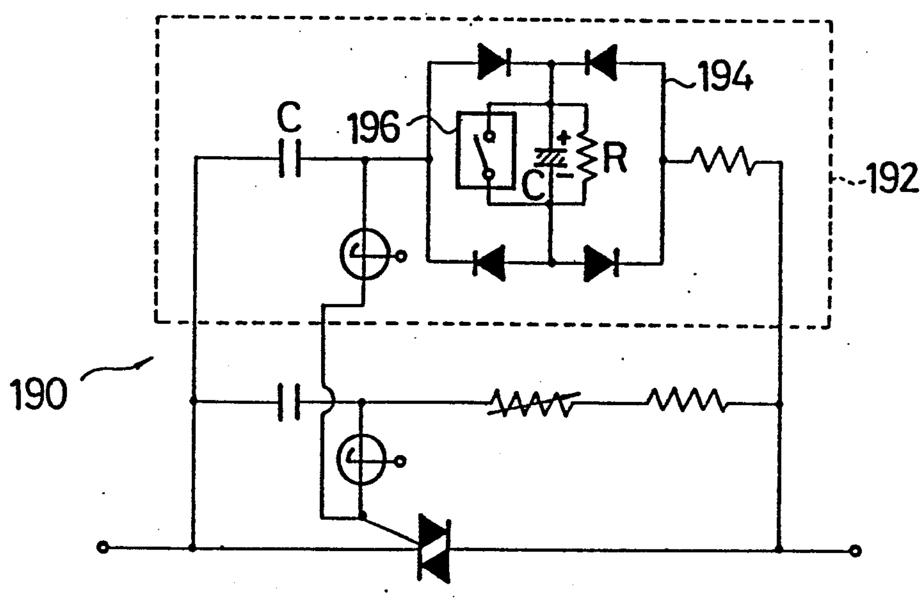

FIG.16

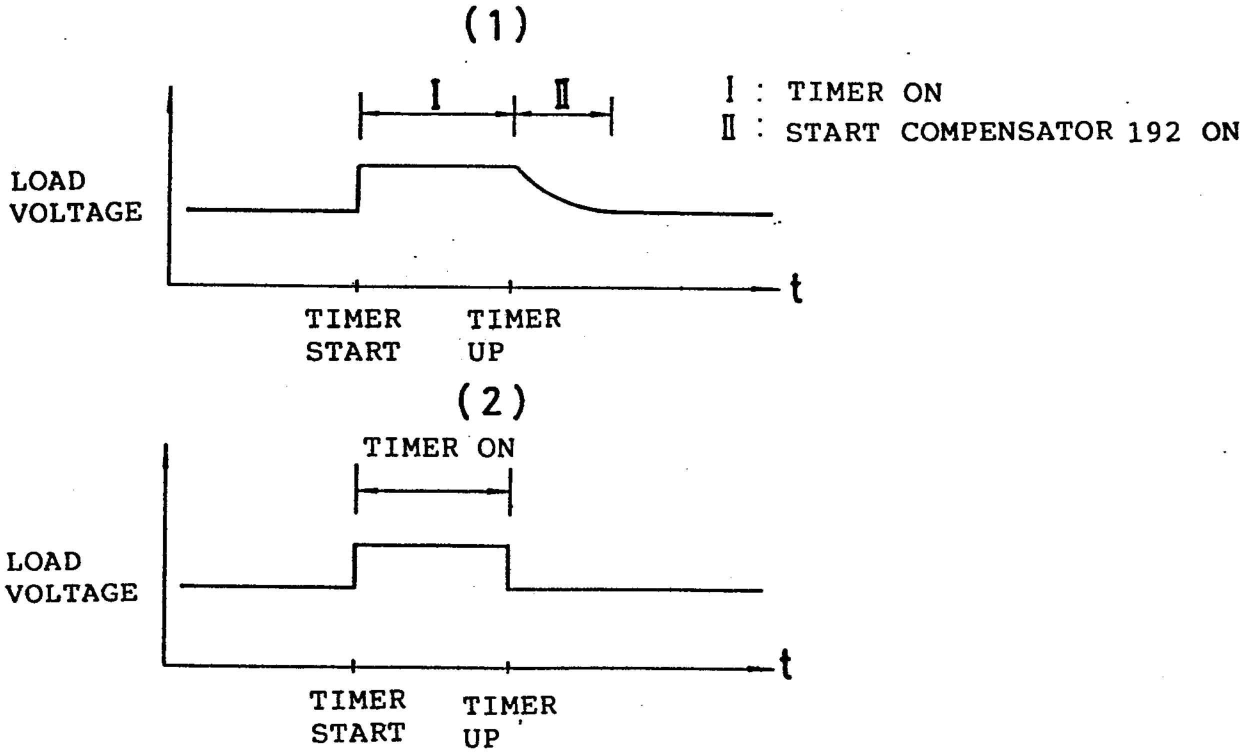
(1)
I
II
I : TIMER ON
II : START COMPENSATOR 192 ON
LOAD VOLTAGE
t
TIMER START
TIMER UP
(2)
TIMER ON
LOAD VOLTAGE
t
TIMER START
TIMER UP

FIG.17

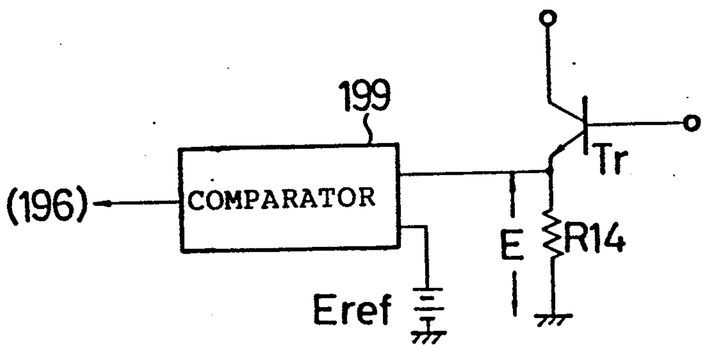

FIG. 18

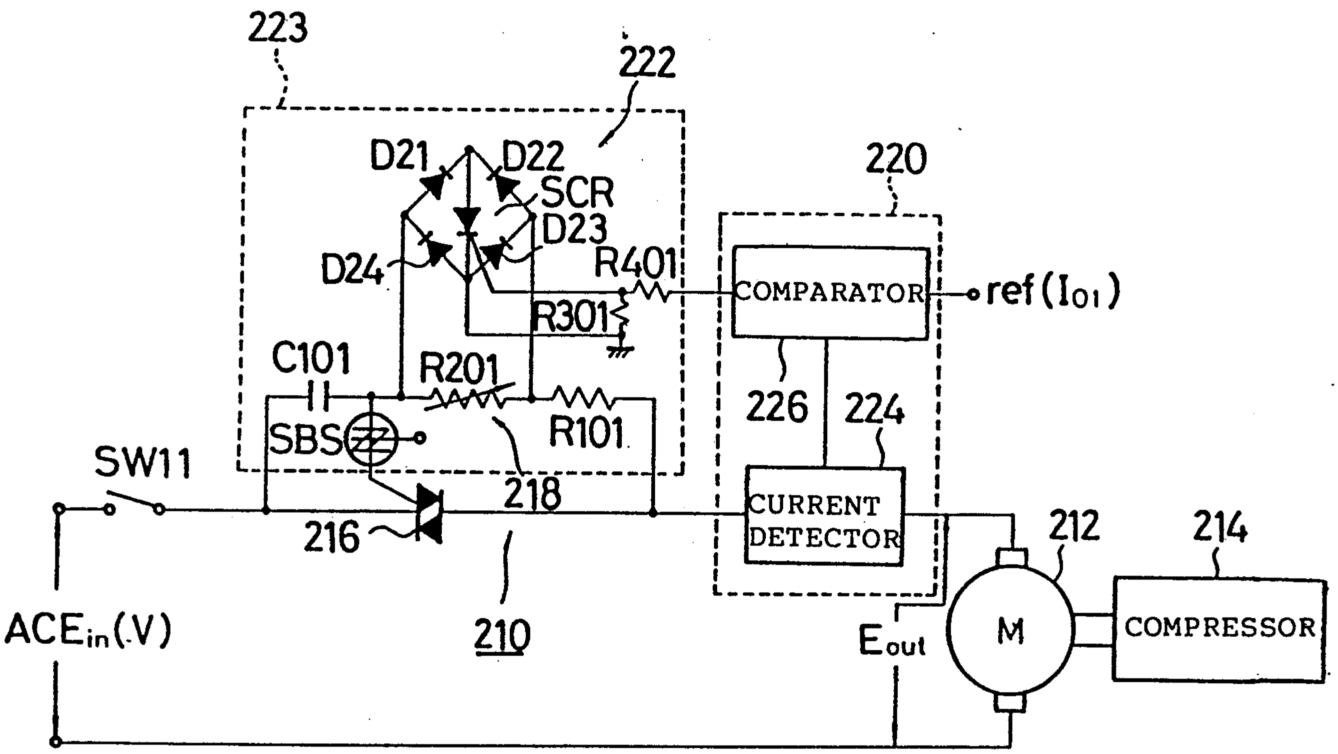

223
222
D21
D22
SCR
D23
D24
R401
R301
C101
R201
SBS
R101
218
220
COMPARATOR
ref ($I_{01}$)
226
224
CURRENT DETECTOR
SW11
216
210
212
214
$ACE_{in}$(V)
$E_{out}$
M
COMPRESSOR

FIG.19

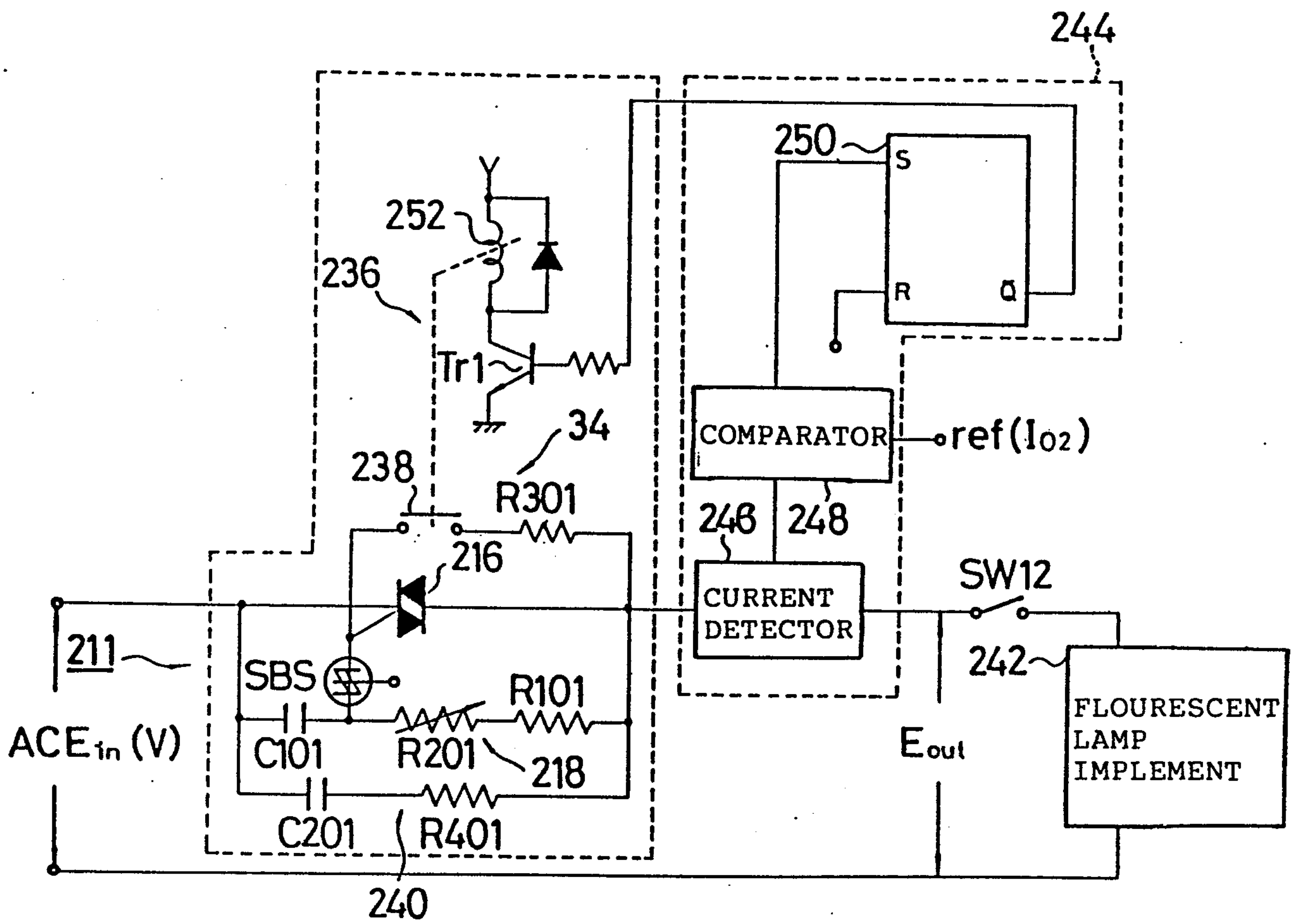
244
250
S
R
Q
252
236
Tr1
34
238
R301
216
COMPARATOR
ref($I_{02}$)
246
248
CURRENT DETECTOR
SW12
211
SBS
R101
242
ACE in (V)
C101
R201
218
E out
FLOURESCENT LAMP IMPLEMENT
C201
R401
240

FIG. 20

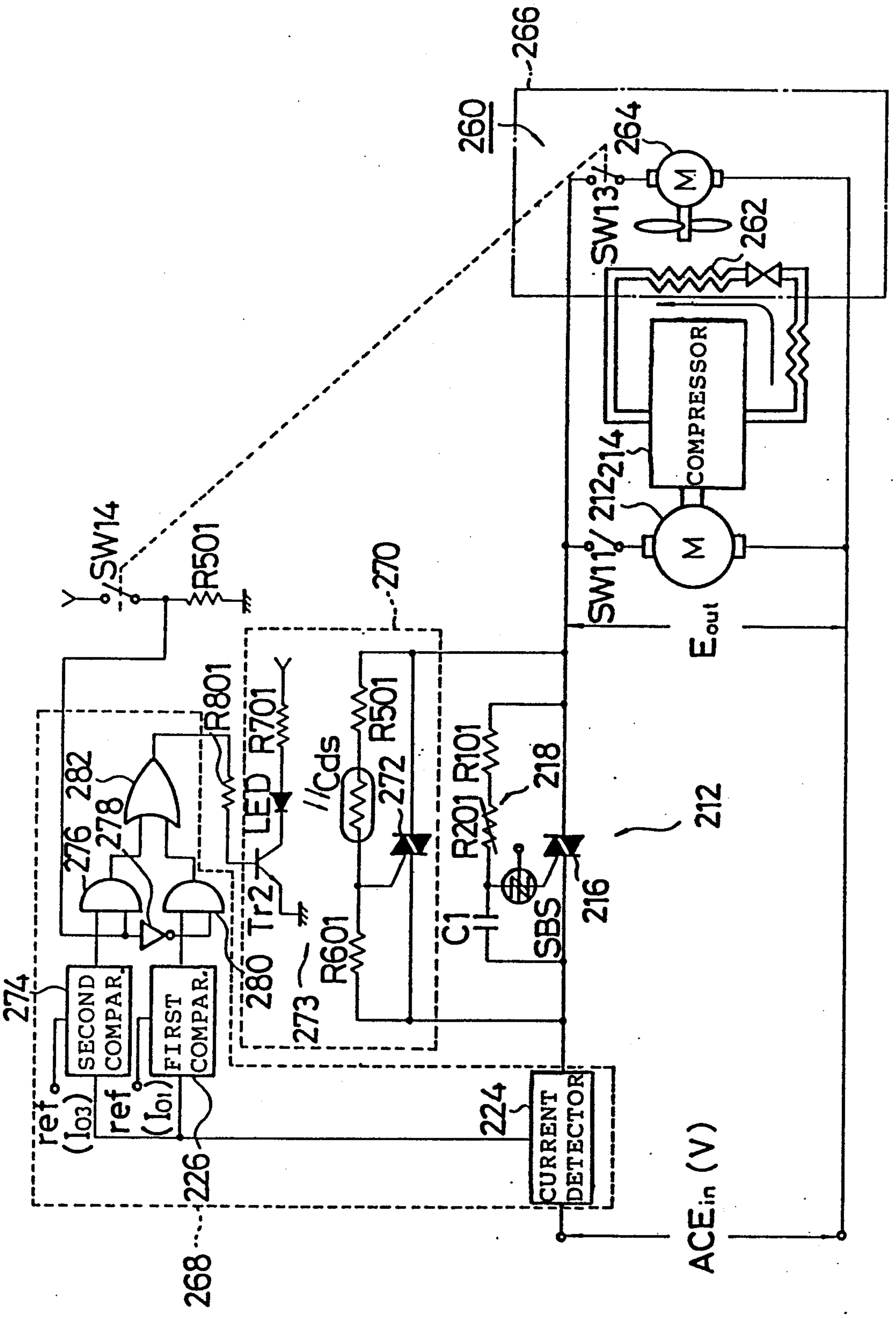
266
260
264
SW13
262
M
COMPRESSOR
214
212
SW11
Eout
SW14
R501
270
R801
R701
LED
282
276
278
Tr2
280
//Cds
R501
272
R101
R201
218
212
C1
SBS
216
R601
273
274
SECOND COMPAR.
FIRST COMPAR.
ref (I03)
ref (I01)
224
CURRENT DETECTOR
226
268
ACEin (V)

FIG. 21

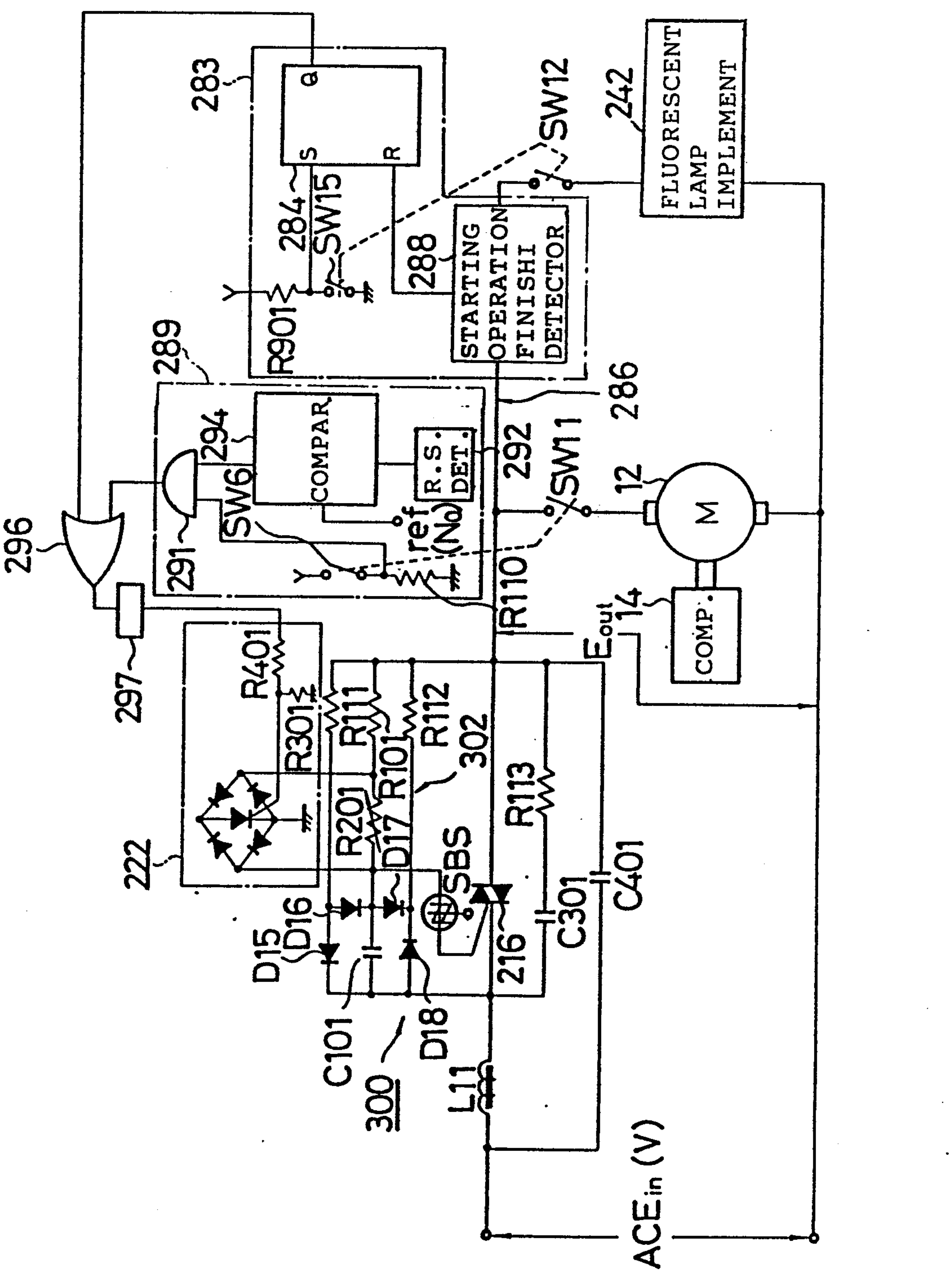
283
Q
S
R
284
SW15
R901
288
STARTING OPERATION FINISHI DETECTOR
SW12
242
FLUORESCENT LAMP IMPLEMENT
289
294
COMPAR
R.S. DET.
292
286
SW11
12
M
291
SW6
ref (No)
296
297
R110
$E_{out}$
14
COMP.
222
R401
R301
R111
R112
R201
D17
R101
302
SBS
R113
D15
D16
C101
300
D18
216
C301
C401
L11
$ACE_{in}$ (V)

FIG.22

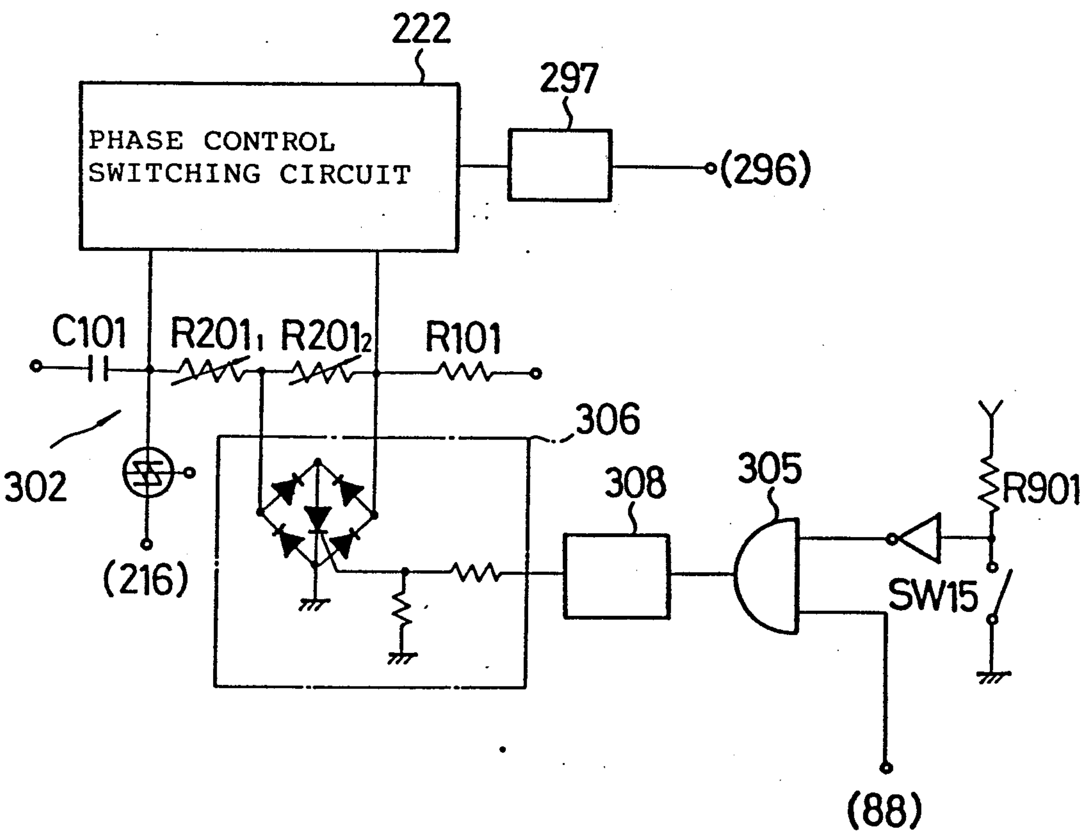
222
297
PHASE CONTROL
SWITCHING CIRCUIT
(296)
C101
R201₁
R201₂
R101
306
302
308
305
R901
(216)
SW15
(88)

# FIG. 23

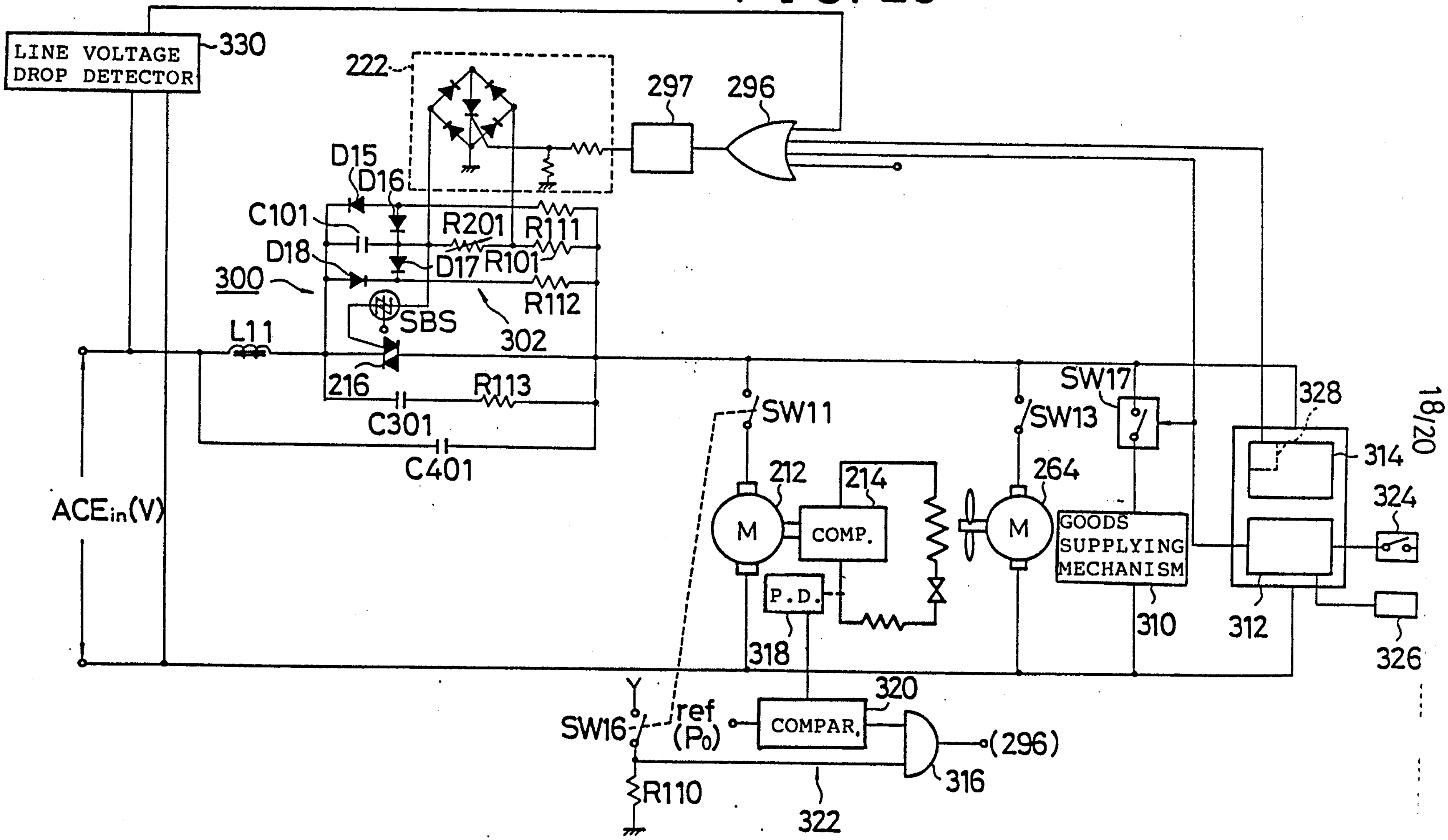
LINE VOLTAGE DROP DETECTOR
330
222
297
296
D15
D16
C101
R201
R111
D18
D17
R101
300
R112
SBS
302
L11
216
R113
C301
C401
ACEin(V)
SW11
SW17
SW13
328
212
214
264
314
324
COMP.
M
GOODS SUPPLYING MECHANISM
P.D.
318
310
312
326
SW16
ref
(P0)
COMPAR.
320
(296)
316
R110
322

FIG. 24

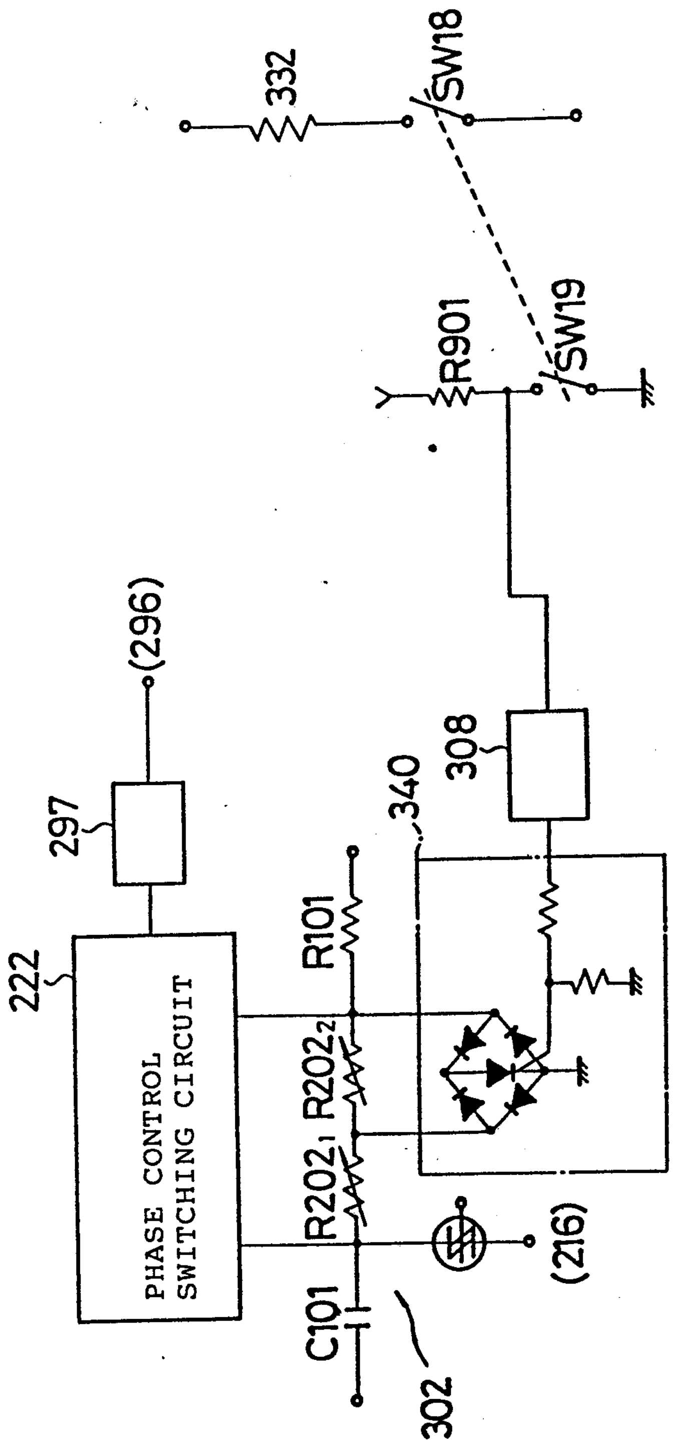
332
SW18
SW19
R901
297
(296)
222
PHASE CONTROL
SWITCHING CIRCUIT
R101
R202$_1$
R202$_2$
340
308
C101
302
(216)

FIG. 25

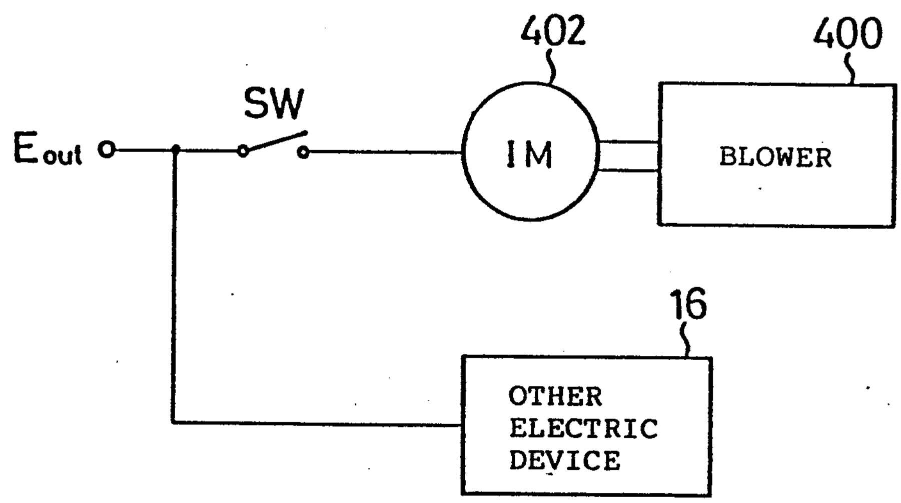
402
400
SW
Eout
IM
BLOWER
16
OTHER ELECTRIC DEVICE

FIG. 26

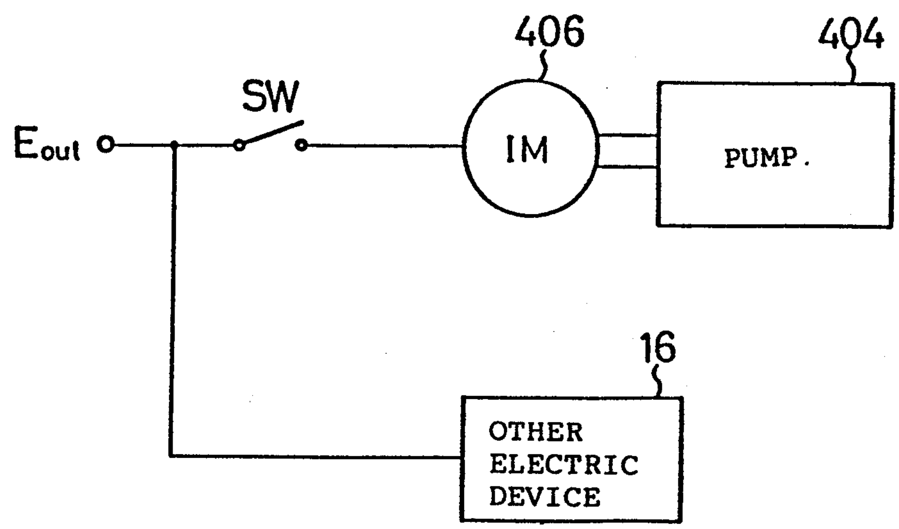
406
404
SW
Eout
IM
PUMP
16
OTHER ELECTRIC DEVICE

# INTERNATIONAL SEARCH REPORT

International Application No. PCT 0217954

**I. CLASSIFICATION OF SUBJECT MATTER** (if several classification symbols apply, indicate all) [3]

According to International Patent Classification (IPC) or to both National Classification and IPC

Int. $Cl^4$ G05F1/45, H02P1/26

**II. FIELDS SEARCHED**

Minimum Documentation Searched [4]

| Classification System | Classification Symbols |
|---|---|
| IPC | G05F 1/45, H02P 1/26 |

Documentation Searched other than Minimum Documentation to the Extent that such Documents are Included in the Fields Searched [5]

| | |
|---|---|
| Jitsuyo Shinan Koho | 1926 - 1985 |
| Kokai Jitsuyo Shinan Koho | 1971 - 1985 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| Y | Hatsumei Kyokai Kokai Giho 81-3829 (Hitachi, Ltd.), 20 July 1981 (20. 07. 81) | 1-37 |
| Y | JP, A, 50-147515 (Hitachi, Ltd.), 26 November 1975 (26. 11. 75) (Family: none) | 1-37 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| October 14, 1985 (14. 10. 85) | October 28, 1985 (28. 10. 85) |
| **International Searching Authority** [1] | **Signature of Authorized Officer** [20] |
| Japanese Patent Office | |